# EUROPEAN PATENT SPECIFICATION

(11) **EP 2 151 710 B1**
(45) Date of publication and mention of the grant of the patent: **15.07.2015**
(21) Application number: 09009961.5
(22) Date of filing: 01.08.2009
(51) Int. Cl.: G02F 1/1337

(54) **Alignment substrate, method of manufacturing the alignment substrate and liquid crystal display device having the alignment substrate**
Ausrichtungssubstrat, Verfahren zur Herstellung des Ausrichtungssubstrats und Flüssigkristallanzeigevorrichtung mit dem Ausrichtungssubstrat
Substrat d'alignement, procédé de fabrication du substrat d'alignement, et dispositif d'affichage à cristaux liquides disposant du substrat d'alignement

(30) Priority: 06.08.2008 KR 20080076892
(43) Date of publication of application: 10.02.2010
(73) Proprietor: Samsung Display Co., Ltd., Yongin-City, Gyeonggi-Do (KR)
(72) Inventor: Choi, Nak-Cho, Guro-gu Seoul (KR); Ahn, Hyun-Ku, Hwaseong-si Gyeonggi-do (KR); Seo, Bong-Sung, Yongin-si, Gyeonggi-do (KR); Kim, Young-Gu, Suwon-si Gyeonggi-do (KE); Jung, Min-Sik, Gangnam-gu Seoul (KR); Jung, Tae-Sung, Suwon-si Gyeonggi-do (KR); Sung, Byoung-Hun, Hwaseong-si Gyeonggi-do (KR); Kim, Sung-Yi, Gwangju-si Gyeonggi-do (KR)
(74) Representative: Dr. Weitzel & Partner

(56) References cited:
- JP-A- 2008 145 700
- US-A1- 2002 171 795
- US-A1- 2007 030 429

## Description

### BACKGROUND OF THE INVENTION

### 1. Field of the Invention

Embodiments of the present invention relate to an alignment substrate, a method of manufacturing the alignment substrate, and a liquid crystal display ("LCD") apparatus having the alignment substrate. More particularly, embodiments of the present invention relate to an alignment substrate having a multi-domain structure, a method of manufacturing the alignment substrate, and an LCD apparatus having the alignment substrate.

### 2. Description of the Related Art

A liquid crystal display ("LCD") is a type of flat panel display device and is widely used. The LCD includes two substrates, a liquid crystal layer interposed between the two substrates and a polarizer disposed on external surfaces of the substrates. The two substrates respectively have a pixel electrode and a common electrode for forming an electric field.

In a vertical alignment ("VA") LCD, a longitudinal axis of the liquid crystal molecule in the liquid crystal layer is vertically arranged with respect to the display substrates. Since the VA LCD has a large contrast ratio and a wide viewing angle, the VA LCD is widely used.

In order to improve the viewing angle of the VA LCD, slits or protrusions may be formed on the pixel electrode and/or the common electrode. Since the pretilt direction of the liquid crystal molecules may be determined by the slits and the protrusions, the slits and the protrusions may arrange the liquid crystal molecules in various directions so that the viewing angle of the VA LCD may be improved.
D¹ = US 2002/171795 discloses a method of manufacturing an aligment substrate according to the preamble of claim 1.

### BRIEF SUMMARY OF THE INVENTION

It has been recognized herein, according to the present invention, that slits and protrusions formed on the pixel electrode and the common electrode may reduce the transmissivity of light in a liquid crystal display ("LCD"). Therefore, exemplary embodiments of the present invention described herein provide a technical solution for improving the viewing angle without requiring slits and protrusions.

Embodiments of the present invention provide an alignment substrate capable of improving the transmissivity of light and the viewing angle.

Embodiments of the present invention also provide a method of manufacturing the alignment substrate.

Embodiments of the present invention further provide an LCD device having the alignment substrate.

According to exemplary embodiments of the present invention, there is provided an alignment substrate. The alignment substrate includes a substrate and an alignment layer. The substrate may include a plurality of unit pixel areas. Each of the unit pixel areas may include a plurality of sub-pixel areas arranged in a matrix configuration. The alignment layer is disposed on the substrate. The alignment layer may have polymer chains protruding from a surface of the alignment layer. The alignment layer may have a plurality of alignment vectors in which the polymer chains are pretilted according to the sub-pixel areas. The alignment vectors corresponding to adjacent sub-pixel areas may point in different directions from each other.

The polymer chains may be photoaligned by first ultraviolet light inclined toward a column direction and second ultraviolet light inclined toward a row direction that is substantially perpendicular to the column direction. Each of the alignment vectors may have an x-component corresponding to the column direction, a y-component corresponding to the row direction and a z-component corresponding to a direction substantially perpendicular to the column direction and the row direction. The alignment vectors of adjacent sub-pixels projected to a surface defined by the column direction and the row direction may be substantially perpendicular to each other. The alignment vectors of adjacent sub-pixel areas which are arranged in the column direction may have x-components pointing in a same direction as each other and y-components pointing in opposite directions from each other. Also, the alignment vectors of adjacent sub-pixel areas which are arranged in the row direction may have x-components pointing in opposite directions from each other and y-components pointing in a same direction as each other.

The projected alignment vectors of first, second, third, and fourth sub-pixel areas may be arranged to rotate in a clockwise rotation or a reverse direction of the clockwise rotation. Alternatively, the projected alignment vectors of the first, second, third, and third sub-pixel areas may respectively point in directions about 135°, about 45°, about -135°, and about -45° with respect to the positive column direction.

The substrate may include a base layer, a gate line, a data line, a switching element, and a pixel electrode. Alternatively, the substrate may include a base layer, color filters, and a common electrode. The substrate may include first and second pixel electrodes within each unit pixel area with the alignment layer disposed on the first and second pixel electrodes.

According to exemplary embodiments of the present invention, there is provided a method of manufacturing an alignment substrate. In the method, a substrate is provided. The substrate may include a plurality of unit pixel areas and each of the unit pixel areas may include a plurality of sub-pixel areas arranged in a matrix configuration. Then, a photoreactive polymer layer may be formed on the substrate. Then, inclined polarized light may be irradiated to the photoreactive polymer layer to form an alignment layer. The alignment layer may have a plurality of alignment vectors in which polymer chains protruding from the photoreactive polymer layer are pretilted according to the sub-pixel areas.

The photoreactive polymer layer may be photoaligned by first ultraviolet light inclined toward a column direction and second ultraviolet light inclined toward a row direction that is substantially perpendicular to the column direction. Each of the alignment vectors may have an x-component corresponding to the column direction, a y-component corresponding to the row direction and a z-component corresponding to a direction substantially perpendicular to the column direction and the row direction. The alignment vectors of adjacent sub-pixels projected to a surface defined by the column direction and the row direction may be substantially perpendicular to each other. The alignment vectors of adjacent sub-pixel areas which are arranged in the column direction may have x-components pointing in a same direction as each other and y-components pointing in opposite directions from each other and the alignment vectors of adjacent sub-pixel areas which are arranged in the row direction may have x-components pointing in opposite directions from each other and y-components pointing in a same direction as each other.

The inclined polarized light may be irradiated to the photoreactive polymer layer through a mask. The mask may include a light-blocking area covering a portion of the unit pixel area and a light-transmitting area exposing a remaining portion of the unit pixel area. For example, a first polarized light inclined toward a positive row direction or a negative row direction may be irradiated to the photoreactive polymer layer through a first mask. The first mask may cover a second sub-pixel area and a fourth sub-pixel area, which are arranged in a second row, of four sub-pixel areas arranged in a 2×2 matrix configuration and may expose a first sub-pixel area and a third sub-pixel area which are arranged in first row. Then, a second polarized light inclined toward the negative row direction or the positive row direction may be irradiated to the photoreactive polymer layer through a second mask. The second mask may cover the first and third sub-pixel areas and may expose the second and fourth sub-pixel areas. Then, a third polarized light inclined toward a positive column direction or a negative column direction may be irradiated to the photoreactive polymer layer through a third mask. The third mask may cover the third and fourth sub-pixel areas which are arranged in a second line and may expose the first and second sub-pixel areas which are arranged in a first line. Then, a fourth polarized light inclined toward the negative column direction or the positive column direction may be irradiated to the photoreactive polymer layer through a fourth mask. The fourth mask may expose the third and fourth sub-pixel areas and may cover the first and second sub-pixel areas.

Angles between the projected alignment vectors of the sub-pixels and one of the column direction and the row direction may be in a range of about 40° to about 50°. The first and second polarized light may have a first energy level, the third and fourth polarized light may have a second energy level, and a ratio of the second energy level to the first energy level may be in a range of about 0.4 to about 2.0. For example, a ratio of the second energy level to the first energy level may be in a range of about 0.4 to about 0.5. The first and second polarized light may be inclined at a first angle with respect to the substrate and the third and fourth polarized light may be inclined at a second angle that is identical to or larger than the first angle with respect to the substrate.

The photoreactive polymer layer may be formed by depositing a blend of a cinnamate series photoreactive polymer and a polyimide-series polymer.

According to exemplary embodiments of the present invention, there is provided an LCD device. The LCD device includes an array substrate, an opposing substrate and a liquid crystal layer. The array substrate may include a lower substrate, a pixel electrode and a lower alignment layer. The lower substrate may include a unit pixel area of which is divided into a plurality of sub-pixel areas arranged in a matrix configuration. The pixel electrode may be disposed on the substrate in the unit pixel area. The lower alignment layer on the lower substrate may have polymer chains protruding from a surface of the alignment layer. The alignment layer may have a plurality of lower alignment vectors in which the polymer chains are pretilted according to the sub-pixel areas. The alignment vector corresponding to adjacent sub-pixel areas may point in different directions from each other. The opposing substrate may include an upper substrate and an upper alignment layer. The upper substrate may be opposite to the lower substrate. The upper alignment layer may be disposed on the upper substrate. The upper alignment layer may have a plurality of upper alignment vectors and each of the upper alignment vectors may point in an opposite direction from a corresponding one of the lower alignment vectors. The liquid crystal layer may be interposed between the array substrate and the opposing substrate.

The lower alignment vectors of adjacent sub-pixel areas sharing a side may be substantially perpendicular to each other and the lower alignment vectors of sub-pixel areas sharing only one point may be opposite to each other. The lower alignment layer and the upper alignment layer may be photoaligned by first ultraviolet light inclined toward a column direction and second ultraviolet light inclined toward a row direction that is substantially perpendicular to the column direction.

The lower alignment vectors of the four sub-pixel areas may be arranged to rotate in a clockwise rotation or a reverse direction of the clockwise rotation, and the upper alignment vectors of the four sub-pixel areas may be arranged to rotate in the clockwise rotation or the reverse direction. The four sub-pixel areas may include first and second sub-pixel areas which are arranged in a first line and third and fourth sub-pixel areas which are arranged in a second line, and the projected lower alignment vectors of the first to fourth sub-pixel areas may respectively point in directions about 135°, about 45°, about -135°, and about -45° with respect to the positive column direction.

According to the alignment substrate, the method of manufacturing the alignment substrate and the LCD device having the alignment substrate, an alignment layer may have a multi-domain structure without slits and protrusions formed on a pixel electrode or a common electrode. Thus, the transmissivity of light may be improved. Also, since liquid crystal molecules are pretilted by the alignment layer, the response time of the liquid crystal molecules may be improved.

### BRIEF DESCRIPTION OF THE DRAWINGS

The above and other features and advantages of the present invention will become readily apparent by reference to the following detailed description when considered in conjunction with the accompanying drawings, wherein:

FIG. 1 is a perspective view illustrating an exemplary liquid crystal display ("LCD") device in accordance with Embodiment 1 of the present invention;

FIG. 2 is a plan view illustrating an exemplary pixel in the exemplary LCD device illustrated in FIG. 1;

FIG. 3 is a cross-sectional view taken along line I-I' shown in FIG. 2;

FIG. 4 is a flowchart illustrating an exemplary method of manufacturing the exemplary array substrate illustrated in FIGS. 1 to 3;

FIG. 5 is a cross-sectional view illustrating an exemplary process of exposing an exemplary array substrate;

FIG. 6 is a perspective view illustrating an exemplary mask illustrated in FIG. 5;

FIG. 7 is a perspective view illustrating an incident direction of ultraviolet light and an alignment direction of an exemplary alignment layer with respect to the exemplary lower alignment layer of FIG. 3;

FIG. 8 shows chemical structures of the exemplary photoreactive polymer layer before and after the exemplary photoalignment process of the exemplary alignment layer;

FIG. 9 is a perspective view illustrating the photoalignment of polymer chains protruding from a surface of the exemplary lower alignment layer;

FIGS. 10A to 10D are perspective views illustrating exemplary processes of forming the exemplary lower alignment layer;

FIG. 11A is a plan view illustrating alignment directions of the exemplary lower alignment layer formed by the exemplary photoalignment processes;

FIG. 11B is a plan view illustrating alignment directions of an exemplary upper alignment layer formed by the exemplary photoalignment process;

FIG. 11C is a plan view illustrating alignment directions of the exemplary lower alignment layer and the exemplary upper alignment layer;

FIG. 12 is a cross-sectional view taken along line II-II' illustrated in FIG. 11C;

FIG. 13 is a plan view illustrating directions of measuring retardation values of the exemplary LCD device illustrated in FIG. 11C;

FIG. 14A is a simplified plan view illustrating an exemplary LCD device employing an exemplary array substrate of which the exemplary lower alignment layer has the lower alignment vector inclined in the negative column direction and an exemplary opposing substrate of which the exemplary upper alignment layer has the upper alignment vector inclined in the positive column direction;

FIG. 14B is a simplified cross-sectional view illustrating alignment of the liquid crystal molecule in the exemplary LCD device illustrated in FIG. 14A;

FIG. 15 is a graph illustrating the cell gaps of the exemplary LCD device illustrated in FIG. 14A and 14B according to the incident directions of the light illustrated in FIG. 13;

FIGS. 16A to 16D are graphs illustrating cell gaps to the incident direction of the light for measuring the retardation;

FIG. 17 is a graph illustrating a relationship between the exposure ratio value and a directional angle corresponding to a minimum retardation value of an exemplary LCD device;

FIG. 18 is a graph illustrating a relationship between the directional angle and the cell gap with respect to exposure ratios of about 1.0:0.4 and about 1.0:0.5;

FIG. 19A is a plan view illustrating alignment directions of the exemplary lower alignment layer formed by the exemplary photoalignment processes in accordance with Embodiment 2 of the present invention;

FIG. 19B is a plan view illustrating alignment directions of the exemplary upper alignment layer formed by the exemplary photoalignment processes in accordance with Embodiment 2 of the present invention;

FIG. 19C is a plan view illustrating alignment directions of the exemplary LCD device including the exemplary lower alignment layer illustrated in FIG. 19A and the exemplary upper alignment layer illustrated in FIG. 19B which are combined with each other;

FIG. 20 is a plan view illustrating a unit pixel area PA of an exemplary array substrate in accordance with Embodiment 3 of the present invention; and

FIG. 21 is a plan view illustrating a unit pixel area PA of an exemplary array substrate in accordance with Embodiment 4 of the present invention.

### DETAILED DESCRIPTION OF THE INVENTION

The present invention is described more fully hereinafter with reference to the accompanying drawings, in which exemplary embodiments of the present invention are shown. The present invention may, however, be embodied in many different forms and should not be construed as limited to the exemplary embodiments set forth herein. Rather, these exemplary embodiments are provided so that this disclosure will be thorough and complete, and will fully convey the scope of the present invention to those skilled in the art. In the drawings, the sizes and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular exemplary embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Exemplary embodiments of the invention are described herein with reference to cross-sectional illustrations that are schematic illustrations of idealized exemplary embodiments (and intermediate structures) of the present invention. As such, variations from the shapes of the illustrations as a result, for example, of manufacturing techniques and/or tolerances, are to be expected. Thus, exemplary embodiments of the present invention should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be described in detail with reference to the accompanying drawings.

### Embodiment 1

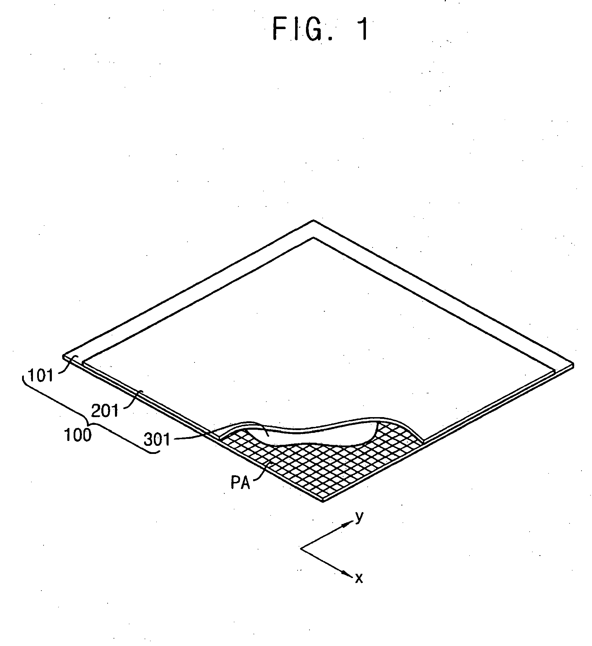

FIG. 1 is a perspective view illustrating an exemplary liquid crystal display ("LCD") device in accordance with Embodiment 1 of the present invention.

Referring to FIG. 1, an LCD device 100 includes an array substrate 101, an opposing substrate 201 and a liquid crystal layer 301.

The array substrate 101 and the opposing substrate 201, which are opposite to each other, are combined by a sealing member between the array substrate 101 and the opposing substrate 201, which extends along edge portions of the array substrate 101 and the opposing substrate 201. Liquid crystal is interposed in a space defined by the array substrate 101, the opposing substrate 201 and the sealing member to form the liquid crystal layer 301.

An alignment substrate in accordance with exemplary embodiments of the present invention may include the array substrate 101 and the opposing substrate 201. The array substrate 101 and the opposing substrate 201 may orientate liquid crystal molecules in the liquid crystal layer 301.

The opposing substrate 201 may include a red color filter, a green color filter and a blue color filter. The array substrate 101 may include a switching element and may be driven by an active matrix driving method using the switching element.

The array substrate 101 may have a substantially rectangular shape. Hereinafter, a direction substantially parallel to a horizontal side of the array substrate 101 is referred to as a first direction X and a direction substantially parallel with a vertical side of the array substrate 101 is referred to as a second direction Y. Also, a column direction indicates the first direction and a third direction opposite to the first direction, and a row direction indicates the second direction and a fourth direction opposite to the second direction. For example, the first direction X and the third direction -X may respectively indicate a positive column direction and a negative column direction, and the second direction Y and the fourth direction -Y may respectively indicate a positive row direction and a negative row direction.

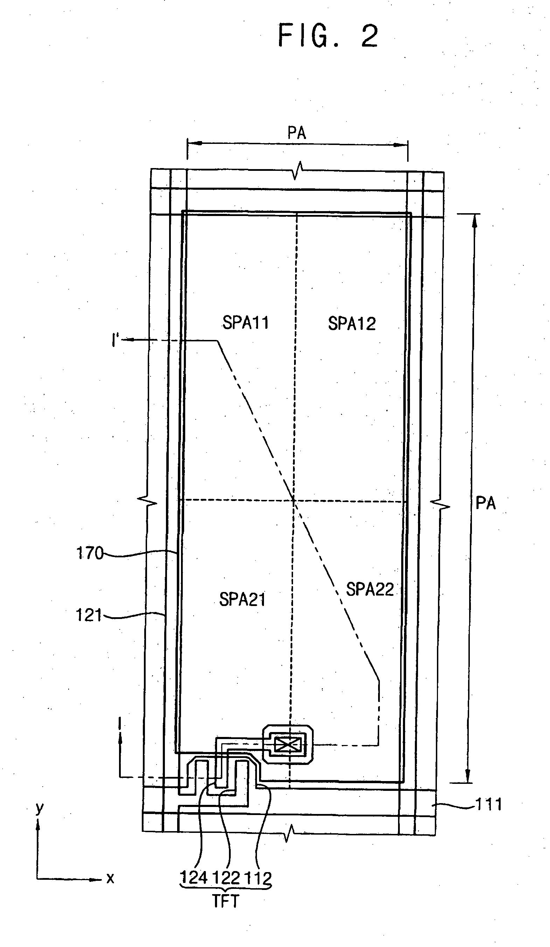

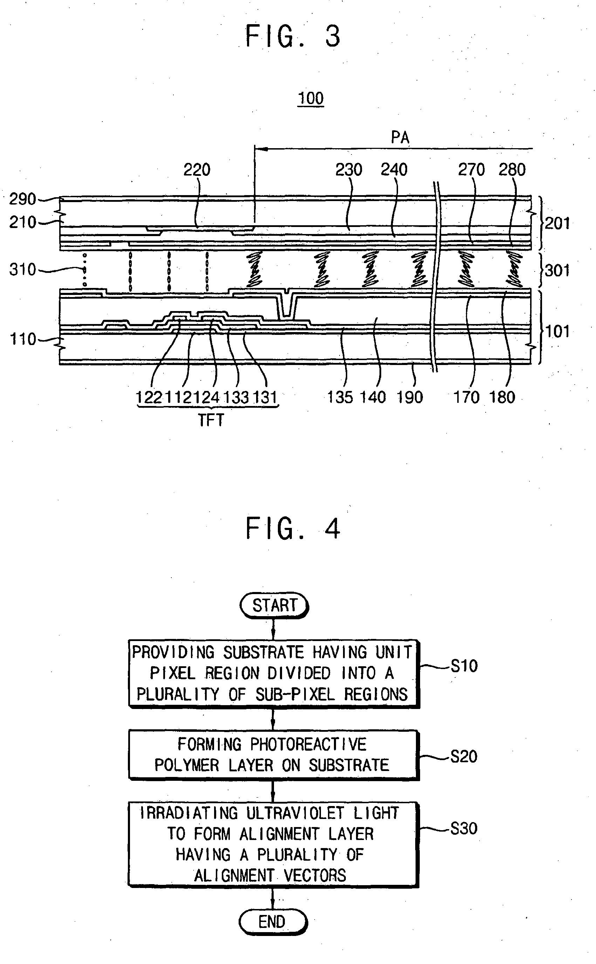

FIG. 2 is a plan view illustrating an exemplary pixel illustrated in the exemplary LCD device illustrated in FIG. 1. FIG. 3 is a cross-sectional view taken along line I-I' shown in FIG. 2.

Referring to FIGS. 1 to 3, the array substrate 101 includes a lower substrate, a pixel electrode 170 and a lower alignment layer 180. The lower substrate may include a lower base substrate 110, a plurality of gate lines 111, a plurality of data lines 121, and a plurality of thin film transistors ("TFTs").

The lower base substrate 110 may include a plurality of unit pixel areas PA arranged in a matrix shape. The unit pixel area PA may indicate a minimized unit area in which the liquid crystal of the liquid crystal layer 301 is independently controlled. The unit pixel areas PA may respectively correspond to the red color filter, the green color filter and the blue color filter in the opposing substrate 201.

In Embodiment 1 of the present invention, each of the unit pixel areas PA may be divided into a plurality of sub-pixel areas arranged in a matrix shape. For example, as illustrated in FIG. 2, each of the unit pixel areas PA may be divided into four sub-pixel areas SPA11, SPA12, SPA21, and SPA22. The four sub-pixel areas may include a first sub-pixel area SPA11, a second sub-pixel area SPA12, a third sub-pixel area SPA21, and a fourth sub-pixel area SPA22. The second sub-pixel area SPA12 may be adjacent to and on the right side of the first sub-pixel area SPA11. The third sub-pixel area SPA21 may be adjacent to and on the lower side of the first sub-pixel area SPA 11. The fourth sub-pixel area SPA22 may be adjacent to and on the lower side of the second sub-pixel area SPA12 and may be adjacent to and on the right side of the third sub-pixel area SPA21. In Embodiment 1 of the present invention, the unit pixel area PA may have various shapes, for example a 'V' shape, a 'Z' shape, etc.

FIG. 4 is a flowchart illustrating an exemplary method of manufacturing the exemplary array substrate illustrated in FIGS. 1 to 4.

In an exemplary method of manufacturing the array substrate 101, as described above, a substrate including the unit pixel areas PA is provided (step S10).

Referring to FIGS. 2 and 3, the lower substrate including the lower base substrate 110, the gate lines 111, the data lines 121, the TFTs, and the pixel electrode 170 may serve for the substrate. The pixel electrode 170 may be formed or otherwise disposed on the lower substrate having the gate lines 111 and the data lines 121 formed or otherwise disposed on the lower base substrate 110.

In an exemplary embodiment, a gate metal material may be sputtered on the lower base substrate 110 to form a gate metal layer. The gate metal layer formed on the lower base substrate 110 may be patterned to form the gate lines 111 and gate electrodes 112 respectively protruding from the gate lines 111. The gate lines 111 may be parallel with one another and each of the gate lines 111 may extend in the first direction X between adjacent unit pixel areas PA.

A plurality of storage lines (not illustrated in FIGS. 2 and 3) may also be formed from the gate metal layer.

Then, as illustrated in FIGS. 2 and 3, a gate insulation layer 131 and a semiconductor pattern 133 are formed. The gate insulation layer 131 may be formed or otherwise disposed on the gate lines 111 and on exposed portions of the lower base substrate 110. A semiconductor material may be deposited on the gate insulation layer 131 to form a semiconductor material layer. The semiconductor material layer may be etched to form the semiconductor pattern 133. The semiconductor pattern 133 on the gate insulation layer 131 may correspond to the gate electrode 112.

Then, a data metal material may be deposited on the gate insulation layer 131 and semiconductor pattern 133 to form a data metal material layer. The data metal material layer may be patterned to form the data lines 121, source electrodes 122 and drain electrodes 124.

The data lines 121 may extend in the second direction Y on the gate insulation layer 131. The source electrode 122 may protrude from a portion of the data line 121 adjacent to a point on which the gate line 111 crosses the data line 121 and may partially overlap with the semiconductor pattern 133.

The drain electrode 124 may be on the semiconductor pattern 133 and may be opposite to the source electrode 122. A portion of the drain electrode 124 may be in the unit pixel area PA.

The TFT may include the gate electrode 112, the gate insulation layer 131, the semiconductor pattern 133, the source electrode 122, and the drain electrode 124.

Then, a passivation layer 135 may be formed or otherwise disposed on the lower base substrate 110 having the data metal pattern including the data line 121. An organic insulation layer 140 may be formed or otherwise disposed on the passivation layer 135. The organic insulation layer 140 and the passivation layer 135 may have a contact hole to expose a portion of the drain electrode 124.

A transparent conductive material may be deposited on the organic insulation layer 140 to form a transparent conductive material layer. The transparent conductive material may include indium tin oxide ("ITO") and/or indium zinc oxide ("IZO"). The transparent conductive material layer may be patterned to form the pixel electrode 170. The pixel electrode 170 may be electrically connected to the drain electrode 124 through the contact hole.

Then, a photoreactive polymer layer may be formed or otherwise disposed on the lower substrate having the pixel electrode 170 (step S20, as shown in FIG. 4).

A blend comprising a cinnamate series photoreactive polymer, which comprises a cinnamate group, and a polymer which is a polyimide, may be disposed on the pixel electrode 170. The blend may be cured to form the photoreactive polymer layer.

For example, the photoreactive polymer which is the cinnamate series and the polymer which is the polyimide series may be blended at a weight ratio of about 1: 9 to about 9:1 and the blend of the photoreactive polymer which is the cinnamate series and the polymer which is the polyimide series may be dissolved by an organic solvent. The blend dissolved by the organic solvent may be deposited on the lower substrate by a spin coating method. Then, the blend spin-coated on the lower substrate may be cured to form the photoreactive polymer layer 181.

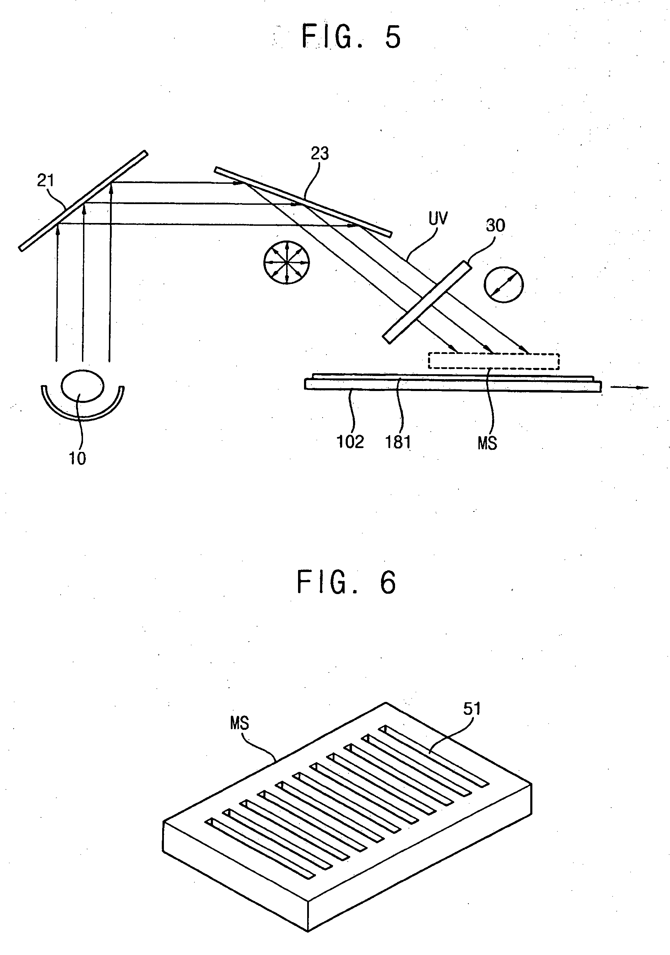

FIG. 5 is a cross-sectional view illustrating an exemplary process of exposing an exemplary array substrate. FIG. 6 is a perspective view illustrating an exemplary mask illustrated in FIG. 5.

Then, as illustrated in FIG. 5, ultraviolet light may be irradiated to the photoreactive polymer layer 181 to form the lower alignment layer 180 in which side chains protruding from the photoreactive polymer layer 181 may be inclined at different pretilt angles with respect to the lower substrate in accordance with the sub-pixel areas SPA11, SPA12, SPA21, and SPA22 (step S30, as shown in FIG. 4).

In an exemplary embodiment, an exposure area of the substrate 102 having the photoreactive polymer layer 181 may be scanned by the ultraviolet light UV using an exposure device illustrated in FIG. 5. The exposure device may include an ultraviolet lamp 10, reflectors 21 and 23, a polarizer 30, and a mask MS.

The ultraviolet lamp 10 may emit the ultraviolet light UV for exposing the photoreactive polymer layer 181. The reflectors 21 and 23 may reflect the ultraviolet light UV to guide the ultraviolet light UV into the exposure area of the substrate 102. The polarizer 30 may polarize the ultraviolet light UV. The polarized ultraviolet light may be filtered by the mask MS disposed on the photoreactive polymer layer 181 to be irradiated to the photoreactive polymer layer 181.

As shown in FIG. 6, the mask MS may include transmissive areas 51 corresponding to a portion of the unit pixel area PA. The transmissive areas 51 of the mask MS may correspond to some of the sub-pixel areas SPA11, SPA12, SPA21, and SPA22. Thus, the polarized ultraviolet light may be irradiated to the photoreactive polymer layer 181 in the sub-pixel areas SPA11, SPA12, SPA21, and SPA22 through the transmissive areas 51 of the mask MS.

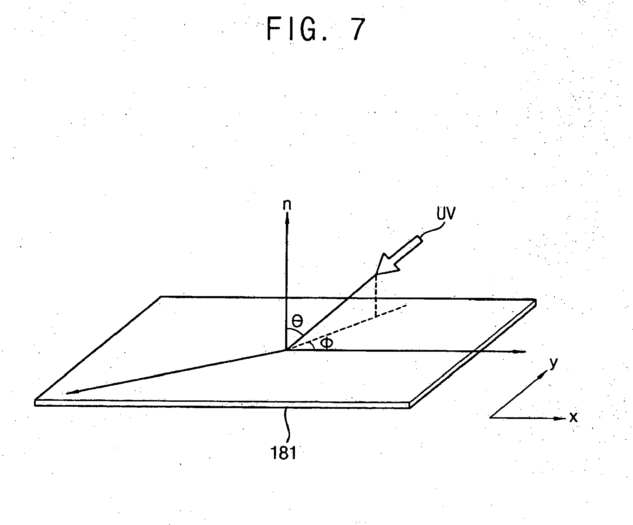

FIG. 7 is a perspective view illustrating an incident direction of ultraviolet light UV and an alignment direction of an exemplary alignment layer with respect to the lower alignment layer 180.

Referring to FIG. 7, the alignment degree of the photoreactive polymer layer 181 may be affected by an incident angle θ of the ultraviolet light UV.

In FIG. 7, the incident angle θ of the ultraviolet light UV may be defined by an angle between a normal direction n that is substantially perpendicular to the photoreactive polymer layer 181 and a proceeding direction of the ultraviolet light UV. Thus, an exposure angle which is defined by an angle of the ultraviolet light UV with respect to the photoreactive polymer layer 181, may be '90°- θ'. A directional angle Ø is defined by an angle between the first direction X and a projected line of the ultraviolet light UV on the photoreactive polymer layer 181.

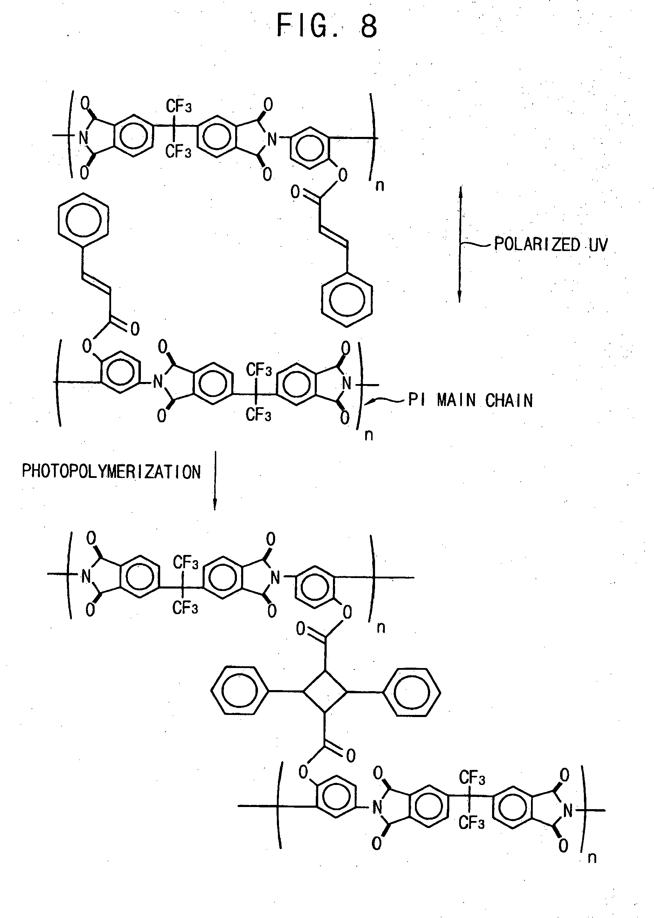

FIG. 8 shows chemical structures of the exemplary photoreactive polymer layer before and after the exemplary photoalignment process of the exemplary alignment layer.

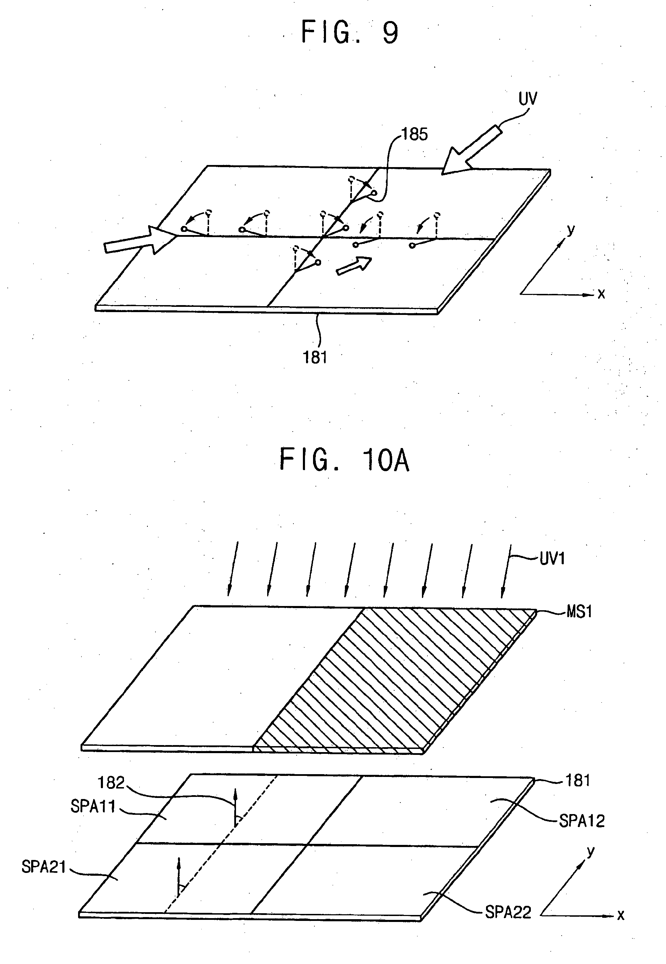

FIG. 9 is a perspective view illustrating the photoalignment of polymer chains protruding from a surface of the exemplary lower alignment layer.

In Embodiment 1, as illustrated in FIG. 8, the photoreactive polymer layer 181 may comprise polyimide main chains. Polymer chains 185 may be side chains connected to the polyimide main chains. The polymer chains 185 may protrude from a surface of the photoreactive polymer layer 181. The side chains may have a double bond to have directional properties. Due to the directional properties, when ultraviolet light UV which is polarized in a predetermined direction is irradiated to the side chains, the side chains may be photopolymerized.

For example, when the ultraviolet light UV having a polarization axis which is substantially perpendicular to the side chains is irradiated to the side chains, adjacent side chains may be photopolymerized as illustrated in FIG. 8, so that, as illustrated in FIG. 9, the photopolymerized side chains may be inclined into an incident direction of the ultraviolet light UV. Therefore, the polymer chains 185 may be inclined at the pretilt angle with respect to the lower base substrate 110.

Since the polymer chains 185 are inclined at the pretilt angle with respect to the lower base substrate 110, directors of the liquid crystal on the lower alignment layer 180 may be inclined at the pretilt angle with respect to the lower base substrate 110.

For example, the polymer chains 185 may be inclined at an angle of about several degrees with respect to a normal line of the lower alignment layer 180 by a photoalignment process.

FIGS. 10A to 10D are perspective views illustrating exemplary processes of forming the exemplary lower alignment layer.

In Embodiment 1 of the present invention, the polymer chains 185 of the photoreactive polymer layer 181 are inclined at different pretilt angles according to the sub-pixel areas SPA11, SPA12, SPA21, and SPA22.

As illustrated in FIG. 10A, a first exposure process is performed. In the first exposure process, a first portion of the unit pixel area PA is exposed to first ultraviolet light UV1 which is inclined toward the positive row direction Y through a first mask MS 1. The first mask MS1 corresponds to the first to fourth sub-pixel areas SPA11, SPA12, SPA21, and SPA22. The first mask MS1 exposes the first and third sub-pixel areas SPA11 and SPA21 which are arranged in a first row and blocks the second and fourth sub-pixel areas SPA12 and SPA22 which are arranged in a second row. Thus, the polymer chains 185 in the first and third sub-pixel areas SPA11 and SPA 21 are exposed to the first ultraviolet light UV1. The polymer chains 185 exposed by the first ultraviolet light UV1 may be pretilted in the positive row direction Y by a first pretilt angle 182 between the positive row direction Y and the polymer chain 185 in the first and third sub-pixel areas SPA11 and SPA21.

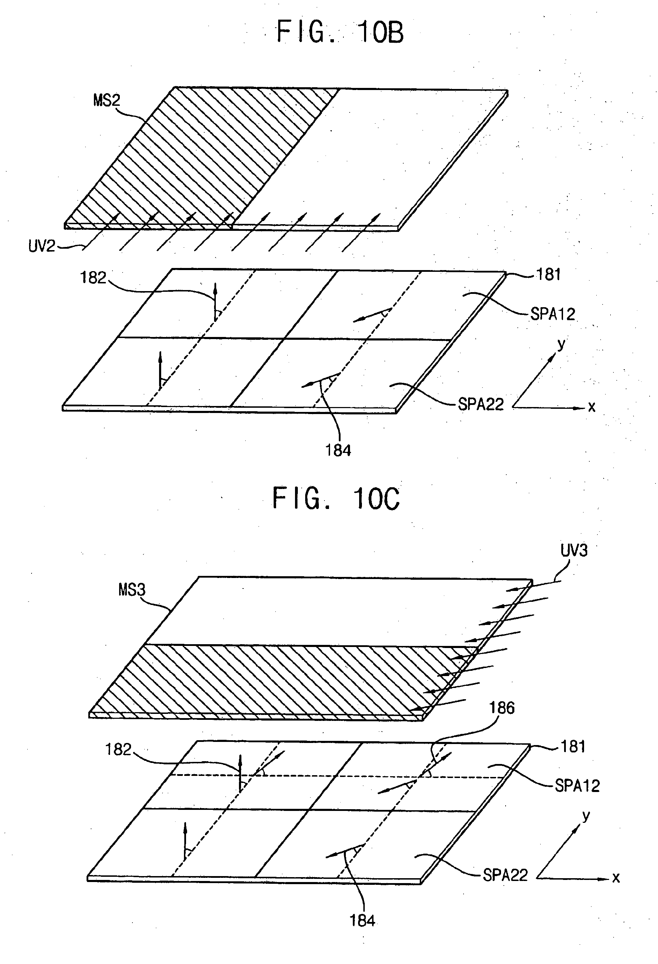

Then, as illustrated in FIG. 10B, a second exposure process is performed. In the second exposure process, a second portion of the unit pixel area PA is exposed to second ultraviolet light UV2 which is inclined toward the negative row direction '-Y' through a second mask MS2. The second mask MS2 blocks the first and third sub-pixel areas SPA11 and SPA21, which are arranged in the first row, and exposes the second and fourth sub-pixel areas SPA12 and SPA22 which are arranged in the second row. Thus, the polymer chains 185 in the second and fourth sub-pixel areas SPA12 and SPA 22 are exposed to the second ultraviolet light UV2. The polymer chains 185 exposed by the second ultraviolet light UV2 may be pretilted in the negative row direction '-Y' by a second pretilt angle 184 between the negative row direction '-Y' and the polymer chain 185 in the second and fourth sub-pixel areas SPA12 and SPA22.

Then, as illustrated in FIG. 10C, a fourth exposure process is performed. In the fourth exposure process, a third portion of the unit pixel area PA is exposed to third ultraviolet light UV3 which is inclined toward the positive column direction 'X' through a third mask MS3. The third mask MS3 exposes the first and second sub-pixel areas SPA11 and SPA12 which are arranged in a first line and blocks the third and fourth sub-pixel areas SPA21 and SPA22 which are arranged in a second line. Thus, the polymer chains 185 in the first and second sub-pixel areas SPA11 and SPA 12 are exposed to the third ultraviolet light UV3. The polymer chains 185 exposed by the third ultraviolet light UV3 may be pretilted in the positive column direction 'X' by a third pretilt angle 186 between the positive column direction 'X' and the polymer chain 185 in the first and second sub-pixel areas SPA11 and SPA12.

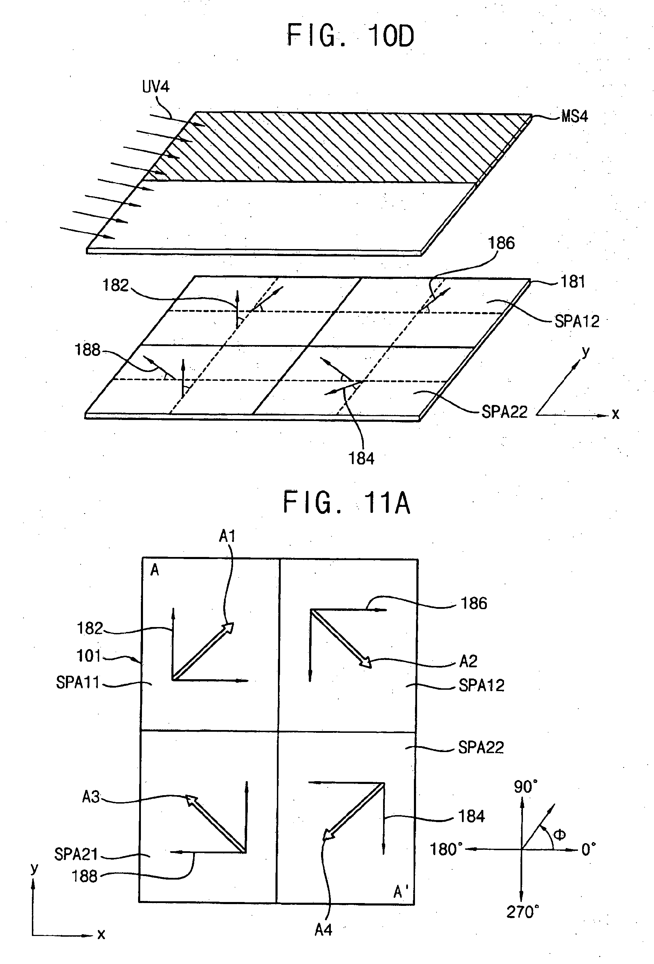

Then, as illustrated in FIG. 10D, a fourth exposure process is performed. In the fourth exposure process, a fourth portion of the unit pixel area PA is exposed to fourth ultraviolet light UV4 which is inclined toward the negative column direction '-X' through a fourth mask MS4. The fourth mask MS4 blocks the first and second sub-pixel areas SPA11 and SPA12 which are arranged in the first line and exposes the third and fourth sub-pixel areas SPA21 and SPA22 which are arranged in the second line. Thus, the polymer chains 185 in the third and fourth sub-pixel areas SPA21 and SPA 22 are exposed to the fourth ultraviolet light UV4. The polymer chains 185 exposed by the fourth ultraviolet light UV4 may be pretilted in the negative column direction '-X' by a fourth pretilt angle 188 between the negative column direction '-X' and the polymer chain 185 in the third and fourth sub-pixel areas SPA21 and SPA22.

FIG. 11A is a plan view illustrating alignment directions of the exemplary lower alignment layer formed by the exemplary photoalignment processes.

The lower alignment layer 180 is formed by the first to fourth exposure processes. In the lower alignment layer 181, as illustrated in FIG. 11A, the polymer chains 185 of the photoreactive polymer layer 181 may be inclined in different directions with respect to the lower substrate, respectively. For example, the polymer chains 185 in the first sub-pixel area SPA11 may be inclined in a direction of a first vector A1 and by an angle of the first vector A1 through the first and third exposure processes, and the polymer chains 185 in the second sub-pixel area SPA12 may be inclined in a direction of a second vector A2 and by an angle of the second vector A2 through the second and third exposure processes. Also, the polymer chains 185 in the third sub-pixel area SPA21 may be inclined in a direction of a third vector A3 and by an angle of the third vector A3 through the first and fourth exposure processes, and the polymer chains 185 in the fourth sub-pixel area SPA22 may be inclined in a direction of a fourth vector A4 and by an angle of the fourth vector A4 through the second and fourth exposure processes.

When the liquid crystal molecules of the liquid crystal layer 301 are positioned on the lower alignment layer 180, the liquid crystal molecules in the first to fourth sub-pixel areas SPA11, SPA12, SPA21, and SPA22 may be arranged along the first to fourth vectors A1, A2, A3 and A4, respectively.

Hereinafter, the first vector A1, the second vector A2, the third vector A3, and the fourth vector A4 will be referred to as a first lower alignment vector, a second lower alignment vector, a third lower alignment vector, and a fourth lower alignment vector, respectively. In FIG. 11A, the first, second, fourth, and third lower alignment vectors A1, A2, A4, and A3 may be arranged to rotate in a clockwise rotation by the first to fourth exposure processes.

For example, when the first to fourth lower alignment vectors A1, A2, A3, and A4 are projected to the lower substrate, two projected directions of two lower alignment vectors of adjacent sub-pixel areas which share one side may be substantially perpendicular to each other and two projected directions of two lower alignment vectors of two sub-pixel areas sharing only one point may be opposite to each other. For example, when the first to fourth lower alignment vectors A1, A2, A3, and A4 are projected to the lower substrate, the projected directions of the first to fourth lower alignment vectors A1, A2, A3, and A4 may be different from one another and may form an angle of one of about 45°, about -45°, about 135°, and about -135° with the first direction 'X'.

Referring again to FIGS. 1 and 3, the opposing substrate 201 includes an upper substrate and an upper alignment layer 280. The upper substrate may include an upper base substrate 210, a light-shielding pattern 220, a color filter pattern 230, an overcoating layer 240, and a common electrode 270.

The light-shielding pattern 220 may be formed or otherwise disposed on a lower surface of the upper base substrate 210, which is a surface which faces the array substrate 101 in the assembled LCD device 100, and may correspond to the gate line 111, the data line 121 and the TFT of the lower substrate.

The color filter pattern 230 may be formed or otherwise disposed on the upper base substrate 210 and may correspond to the unit pixel area PA. For example, the color filter pattern 230 may include a red color filter, a green color filter and a blue color filter. The red, green and blue color filters may be sequentially arranged in the first direction 'X' and may correspond to one unit pixel area PA.

The overcoating layer 240 may cover the color filter pattern 230 and the light-shielding pattern 220. The common electrode 270 may be formed or otherwise disposed on the overcoating layer 240.

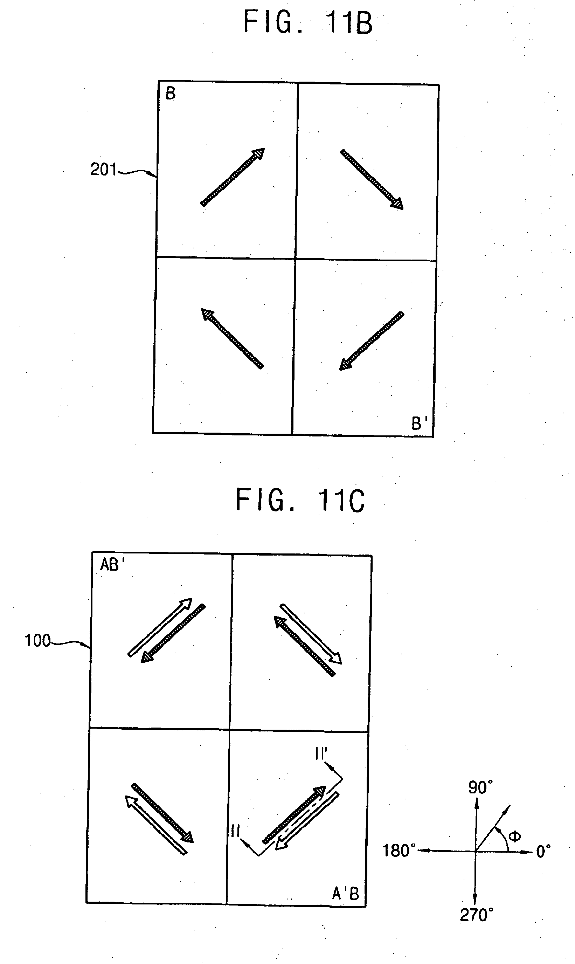

FIG. 11B is a plan view illustrating alignment directions of an exemplary upper alignment layer formed by the exemplary photoalignment process.

Referring to FIG. 3 and FIG. 11B, the upper alignment layer 280 may be formed or otherwise disposed on the common electrode 270. The polymer chains of the upper alignment layer 280 may be inclined with respect to the upper base substrate 210 by different pretilt angles according to the sub-pixel areas. When upper alignment vectors of the upper alignment layer 280 are projected to the upper base substrate 210, the projected direction of the upper alignment vectors may be arranged to rotate in a clockwise rotation, prior to the opposing substrate 201 being combined with the array substrate 101.

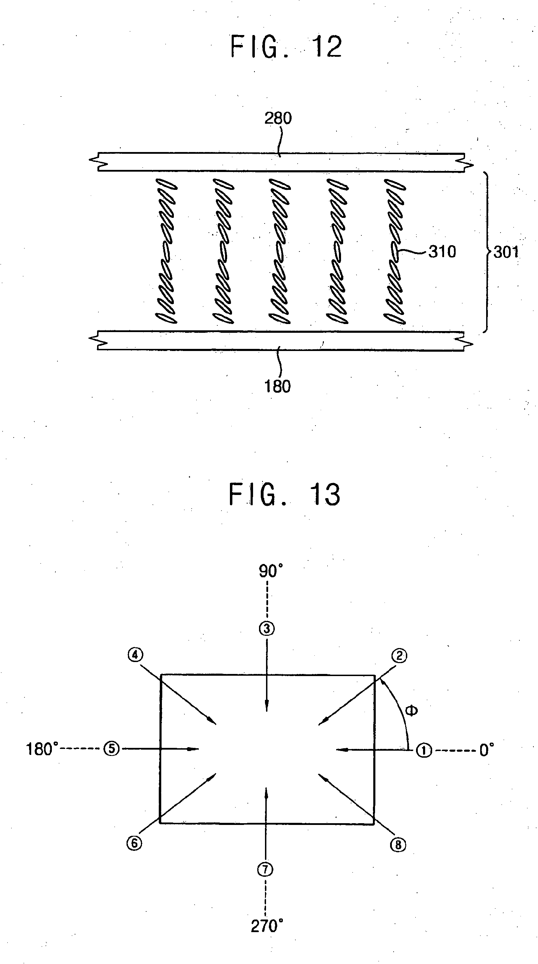

FIG. 11C is a plan view illustrating alignment directions of the exemplary lower alignment layer and the exemplary upper alignment layer. FIG. 12 is a cross-sectional view taken along line II-II' illustrated in FIG. 11C.

Referring to FIG. 11C, when the opposing substrate 201 is combined with the array substrate 101 and the upper alignment vectors of the upper alignment layer 280 and the lower alignment vectors of the lower alignment layer 180 are projected to a reference surface, in each of the sub-pixel areas SPA11, SPA12, SPA21, and SPA22, the projected direction of one of the upper alignment vectors may be opposite to the projected direction of a corresponding one of the lower alignment vectors. For example, in sub-pixel area SPA11, the upper alignment vector may form an angle of about -135° while the lower alignment vector may form an angle of about 45° with the first positive column direction 'X', in sub-pixel area SPA12, the upper alignment vector may form an angle of about 135° while the lower alignment vector may form an angle of about -45° with the positive column direction 'X', in sub-pixel area SPA21, the upper alignment vector may form an angle of about -45° while the lower alignment vector may form an angle of about 135° with the positive column direction 'X', in sub-pixel area SPA22, the upper alignment vector may form an angle of about 45° while the lower alignment vector may form an angle of about -135° with the positive column direction 'X'.

After the array substrate 101 and the opposing substrate 201 are combined with each other, the liquid crystal is injected or otherwise provided between the array substrate 101 and the opposing substrate 201 to form the liquid crystal layer 301. As a result, the LCD device 100 may be manufactured.

The liquid crystal of the liquid crystal layer 301 may be a vertical alignment ("VA") mode. When an electric field formed between the pixel electrode 170 and the common electrode 270 is not applied to the VA mode liquid crystal, the VA mode liquid crystal may be vertically aligned with respect to the array substrate 101 and the opposing substrate 201. As illustrated in FIG. 12, the liquid crystal molecules 310 adjacent to the lower alignment layer 180 may be inclined along the lower alignment vectors and the liquid crystal molecules 310 adjacent to the upper alignment layer 280 may be inclined along the upper alignment vectors of the upper alignment layer 280.

Referring again to FIG. 3, a lower polarization plate 190 may be disposed on a lower surface of the array substrate 101 and an upper polarization plate 290 may be disposed on an upper surface of the opposing substrate 201. A polarizing axis of the lower polarization plate 190 may be substantially perpendicular to a polarizing axis of the upper polarization plate 290. When angles between directions of the liquid crystal molecules 310 and the polarization axes may be one of about 45° and about 135°, the liquid crystal layer 301 may be operated as a good light filter.

In the photoalignment processes described above, the lower and upper alignment layers 180, 280 may be formed to have the lower and upper alignment vectors of which the projected directions may be inclined at one of about 45° and about 135°.

FIG. 13 is a plan view illustrating directions of measuring retardation values of the exemplary LCD device illustrated in FIG. 11C.

As illustrated in FIG. 13, for measuring retardation value of the LCD device 100, light is irradiated to the LCD device 100 along eight incident directions. Angles between adjacent incident directions of the eight incident directions may be substantially the same as one another, such as about 45°. Since the retardation value may be proportional to a cell gap, which is a thickness of the liquid crystal layer 301, the cell gap may be calculated by the retardation value. When the light is irradiated to the liquid crystal molecule 310 along a direction substantially parallel to a major axis of the liquid crystal molecule 310, the light is slightly refracted by the liquid crystal molecule 310. When the light is irradiated to the liquid crystal molecule 310 along a direction substantially parallel to a minor axis of the liquid crystal molecule 310, the light is largely refracted by the liquid crystal molecule 310. Thus, when the light is irradiated to the liquid crystal molecule 310 along the major axis of the liquid crystal molecule 310, the retardation value may be minimum. Also, when the retardation value is minimum, the cell gap may be minimum.

Table 1 illustrates conditions of the photoalignment processes for forming the lower alignment layer 180 and the upper alignment layer 280. In the photoalignment processes described above, the photoreactive polymer layer 181 in each sub-pixel area is twice exposed to the ultraviolet light. In Table 1, 'FIRST IRRADIATION' and 'SECOND IRRADIATION' refers to first irradiation of the ultraviolet light to the photoreactive polymer layer 181 in the photoalignment processes and second irradiation of the ultraviolet light to the photoreactive polymer layer 181 in the photoalignment processes.

**[Table 1]**

| | | EXPERIMENT 1 | EXPERIMENT 2 | EXPERIMENT 3 | EXPERIMENT 4 | EXPERIMENT 5 |
|---|---|---|---|---|---|---|
| OPPOSING SUBSTRATE | FIRST IRRADIATION | 50 mJ | 50 mJ | 25 mJ | 100 mJ | 50 mJ |
| | SECOND IRRADIATION | 50 mJ | 25 mJ | 50 mJ | 50 mJ | |
| ARRAY SUBSTRATE | FIRST IRRADIATION | 50 mJ | 50 mJ | 25 mJ | 100 mJ | 50 mJ |
| | SECOND IRRADIATION | 50 mJ | 25 mJ | 50 mJ | 50 mJ | |

In Table 1, for example, Experiment 1 was performed using an LCD device employing an array substrate and an opposing substrate which were manufactured by the photoalignment processes in which the first irradiated ultraviolet light had an energy level of 50 mJ and the second irradiated ultraviolet light had an energy level of 50 mJ. Experiments 2 to 5 were performed through a same method as Experiment 1, except for the energy level of first and second irradiated ultraviolet light.

Table 2 illustrates the cell gaps calculated in Experiments 1 to 5 illustrated in Table 1 according to the eight incident directions illustrated in FIG. 13. The cell gaps in Table 2 were calculated under conditions that the incident angles θ (refer to FIG. 7) of the first and second irradiated ultraviolet light were about 40°.

**[Table 2]**

| | D1 | D2 | D3 | D4 | D5 | D6 | D7 | D8 |
|---|---|---|---|---|---|---|---|---|
| Ø | 0° | 45° | 90° | 135° | 180° | 225° | 270° | 315° |
| EXPERIMENT 1 | 4.15 µm | 3.97 µm | 3.85 µm | 3.84 µm | 3.98 µm | 4.1 µm | 4.23 µm | 4.25 µm |
| EXPERIMENT 2 | 4.21 µm | 4.04 µm | 3.87 µm | 3.84 µm | 3.93 µm | 4.02 µm | 4.16 µm | 4.23 µm |
| EXPERIMENT 3 | 4.09 µm | 3.88 µm | 3.8 µm | 3.84 µm | 3.97 µm | 4.08 µm | 4.2 µm | 4.21 µm |
| EXPERIMENT 4 | 4.2 µm | 4.02 µm | 3.86 µm | 3.84 µm | 3.95 µm | 4.08 µm | 4.22 µm | 4.25 µm |
| EXPERIMENT 5 | 4.26 µm | 4.17 µm | 3.99 µm | 3.85 µm | 3.83 µm | 3.85 µm | 3.99 µm | 4.17 µm |

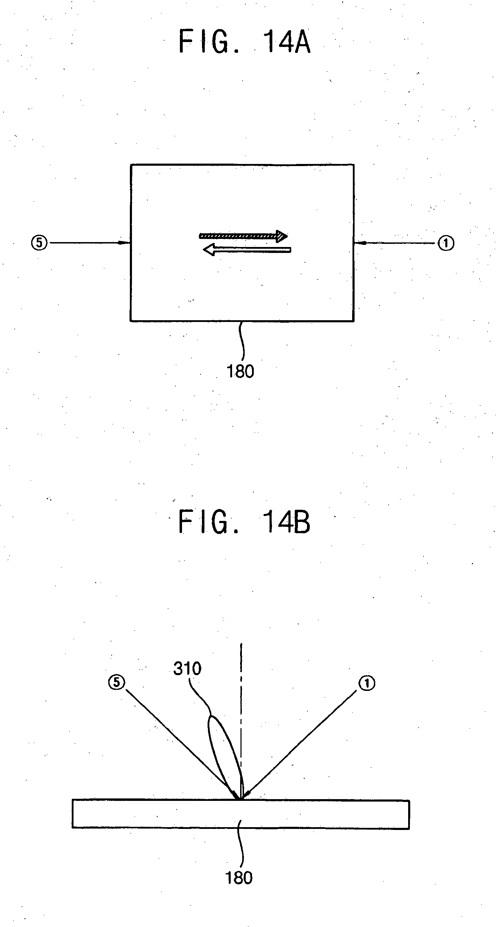

FIG. 14A is a simplified plan view illustrating an exemplary LCD device employing an exemplary array substrate of which the exemplary lower alignment layer has the lower alignment vector inclined in the negative column direction and an exemplary opposing substrate of which the exemplary upper alignment layer has the upper alignment vector inclined in the positive column direction. FIG. 14B is a simplified cross-sectional view illustrating alignment of the liquid crystal molecule in the exemplary LCD device illustrated in FIG. 14A. FIGS. 14A and 14B correspond to Experiment 5 illustrated in Tables 1 and 2.

Referring to FIG. 7 and FIGS. 14A and 14B, when the lower alignment vector of the lower alignment layer 180 is formed using ultraviolet light having an energy level of about 50 mJ and the directional angle of about 180° and the upper alignment vector of the upper alignment layer 280 is formed using ultraviolet light having an energy level of about 50 mJ and the directional angle of about 0°, liquid crystal molecule 310 adjacent to the lower alignment layer 180 may be inclined along the lower alignment vector as illustrated in FIG. 14B.

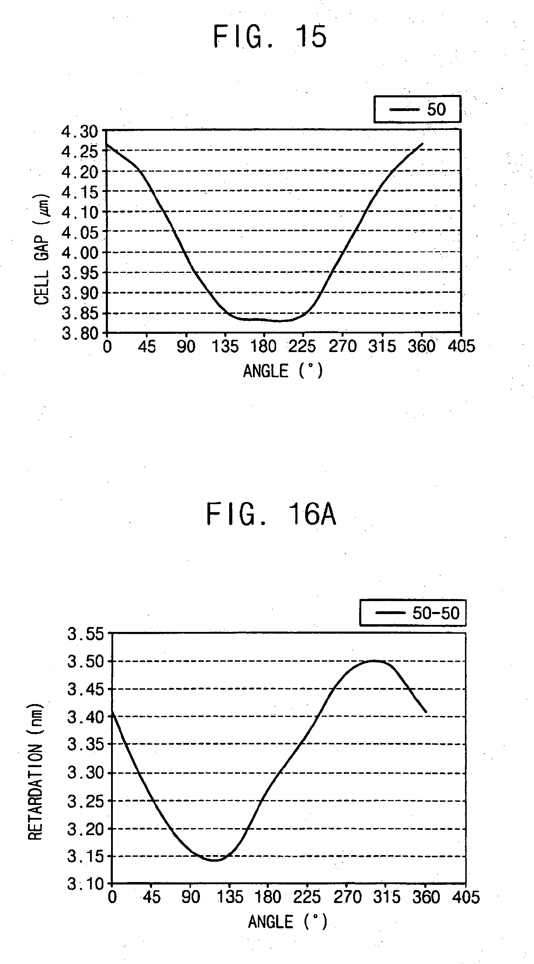

FIG. 15 is a graph illustrating the cell gaps of the exemplary LCD device illustrated in FIG. 14A and 14B according to the incident directions of the light illustrated in FIG. 13.

In FIG. 15, the horizontal axis indicates directional angles Ø between the first direction X and the incident directions of the light, and the vertical axis indicates the cell gaps of Experiment 5 in Table 2. In FIG. 15, the cell gap has a minimum value when the directional angle Ø of the light is about 180°. Therefore, the liquid crystal molecules 310 may be inclined toward a direction of which the directional angle is about 180° as predicted.

In Embodiment 1 of the present invention, first ultraviolet light inclined toward the column direction and second ultraviolet light inclined toward the row direction are irradiated to each sub-pixel area and the alignment vector of each sub-pixel area is determined by the first ultraviolet light and the second ultraviolet light. In order that a projected direction of the alignment vector of each sub-pixel area to a horizontal reference surface is inclined at about 45° or about 135° with respect to the polarizing axes of the lower and upper polarization plate 190 and 290, an inclination degree toward the column direction may be substantially the same as an inclination degree toward the row direction.

The photoreactive polymer layer 181 in each alignment layer 180, 280 of each sub-pixel area twice receives the first ultraviolet light inclined toward the column direction and the second ultraviolet light inclined toward the row direction through the first to fourth exposure processes illustrated in FIGS. 10A to 10D.

When the energy level and the incident angle of the first ultraviolet light are the same as those of the second ultraviolet light, the photoreactive polymer layer 181 may be more effectively photoaligned by the second ultraviolet light than the first ultraviolet light. For example, when the polymer chains 185 of the photoreactive polymer layer 181 are photoaligned by the first and second ultraviolet light, an angle between the polymer chains 185 of the photoreactive polymer layer 181 and the row direction may be smaller than an angle between the polymer chains 185 of the photoreactive polymer layer 181 and the column direction. That is, when the alignment vector of the polymer chain 185 of the photoalignment layer 181 is projected to a horizontal reference surface, an angle between the projected alignment vector and the row direction may be smaller than an angle between the projected alignment vector and the column direction.

Also, the energy level and the incident angle of the ultraviolet light irradiated to the photoreactive polymer layer 181 may have an effect on the photoalignment of the photoreactive polymer layer 181. For example, as the energy level of the ultraviolet light increases, a photoalignment degree of the polymer chains 185 may be increased. Also, as the incident angle of the ultraviolet light increases, the photoalignment degree of the polymer chains 185 may be increased.

In order to form the alignment vectors which are inclined at about ±45° with respect to the column direction and the row direction, the energy level of the second ultraviolet light may be smaller than the energy level of the first ultraviolet light and the incident angle of the second ultraviolet light may be smaller than that of the first ultraviolet light.

For example, for the photoalignment of the photoreactive polymer layer 181, the first ultraviolet light having a first energy level may be irradiated to the photoreactive polymer layer 181 at an incident angle of about 40° and the second ultraviolet light having a second energy level that is less than the first energy level may be irradiated to the photoreactive polymer layer 181 at an incident angle of about 20°.

Hereinafter, the ratio of the energy level of the first ultraviolet light and the energy level of the second ultraviolet light will be referred to as an exposure ratio and the ratio of the energy level of the second ultraviolet light to the energy level of the first ultraviolet light will be referred to as an exposure ratio value.

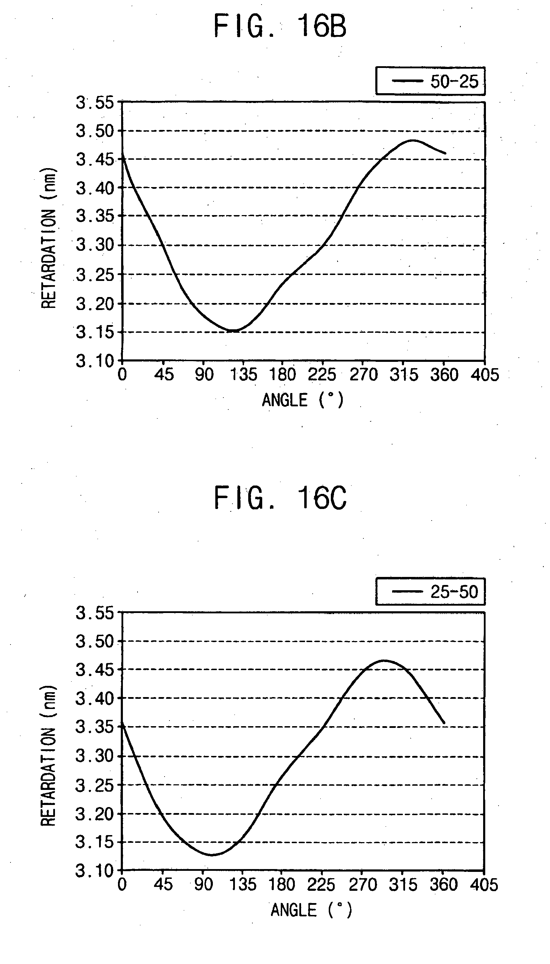

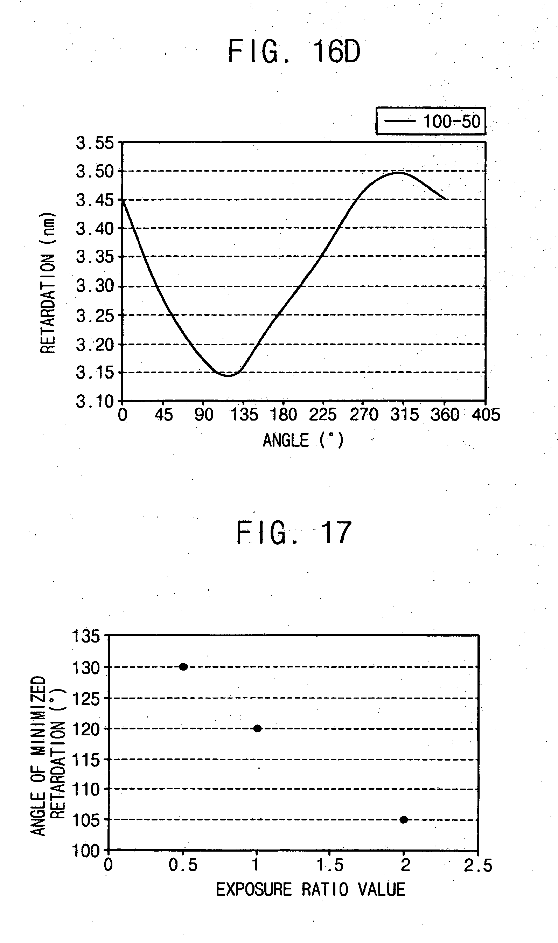

FIGS. 16A to 16D are graphs illustrating retardation values to the incident direction of the light for measuring the cell gaps. FIG. 16A relates to a result of Experiment 1 in Tables 1 and 2. FIG. 16B relates to a result of Experiment 2 in Tables 1 and 2. FIG. 16C relates to a result of Experiment 3 in Tables 1 and 2. FIG. 16D relates to a result of Experiment 4 in Tables 1 and 2.

In FIGS. 16A to 16D, the liquid crystal may be aligned along the directional angle corresponding to a minimum retardation value. Referring to FIGS. 16A to 16D, when the exposure ratio is in a range of about 1.0:0.5 to about 1.0:2.0, the photoreactive polymer layer 181 may be well photoaligned by the first and second ultraviolet light. Thus, the exposure ratio value may be in a range of about 0.5 to about 2.0.

In order to more precisely photo-align the liquid crystal, the exposure ratio value may be in a more narrow range. Referring to FIG. 16A and FIG. 16B, a difference between 135° and the directional angle corresponding to a minimum retardation value of FIG. 16A is larger than a difference between 135° and the directional angle corresponding to a minimum retardation value of FIG. 16B. Likewise, referring to FIG. 16C, a difference between 135° and the directional angle corresponding to a minimum retardation value of FIG. 16C is larger than a difference between 135° and the directional angle corresponding to a minimum retardation value of FIG. 16B. Thus, an exposure ratio to align the liquid crystal along a direction of 135° may be closer to about 1.0:0.5 than about 1.0:1.0.

In FIGS. 16B and 16D, the exposure ratios of FIG. 16B and FIG. 16D are identical to each other. That is, the exposure ratios of FIG. 16B and FIG. 16D are about 1.0:0.5. However, each of the first and second ultraviolet light used in Experiment 4 corresponding to FIG. 16D has the energy level that is twice larger than that of each of the first and second ultraviolet light used in Experiment 2 corresponding to FIG. 16B. A difference between 135° and the directional angle corresponding to a minimum retardation value of FIG. 16B is smaller than a difference between 135° and the directional angle corresponding to a minimum retardation value of FIG. 16D. Thus, the energy level of each of the first and second ultraviolet light may have an effect on the alignment of the liquid crystal. The energy level of the first ultraviolet light to align the liquid crystal along a direction of 135° may be closer to 50 mJ than 100 mJ and the energy level of the second ultraviolet light to align the liquid crystal along a direction of 135° may be closer to 25 mJ than 50 mJ.

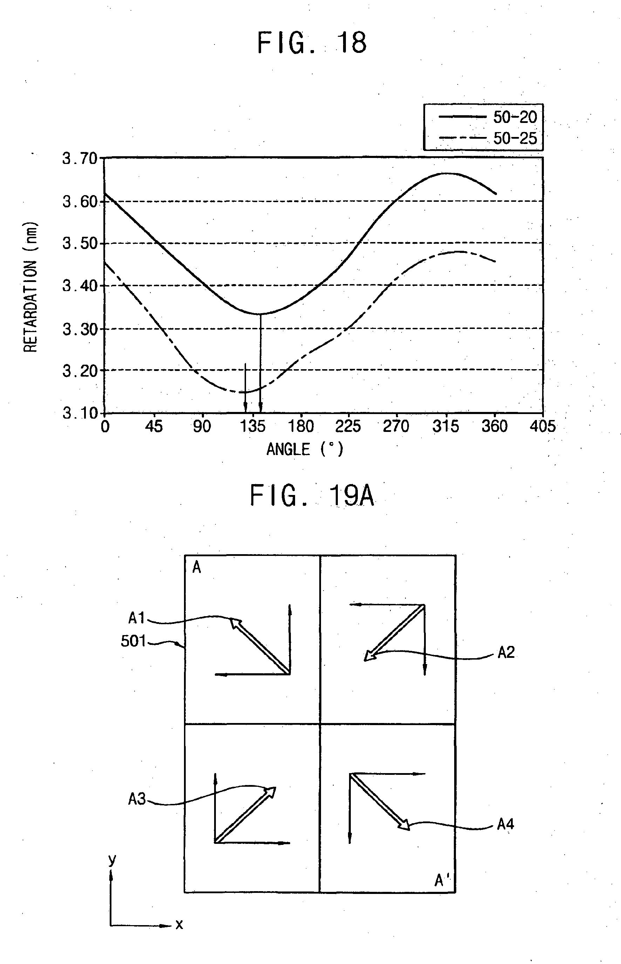

FIG. 17 is a graph illustrating a relationship between the exposure ratio value and a directional angle corresponding to a minimum retardation value of an exemplary LCD device. FIG. 18 is a graph illustrating a relationship between the directional angle and the retardation value with respect to exposure ratios of about 1.0:0.4 and about 1.0:0.5.

Referring to FIG. 17, when the exposure ratio value is close to 0.5, the alignment direction of the liquid crystal may be close to a direction of 135°. Referring to FIG. 18, when the exposure ratio value is in a range of about 0.4 to about 0.5, the alignment direction of the liquid crystal may be close to a direction of 135°. Thus, the exposure ratio value may be in a range of about 0.4 to about 0.5.

According to the alignment substrate including the array substrate and the opposing substrate, the method of manufacturing the alignment substrate and the LCD device having the alignment substrate, a multi-domain structure of the liquid crystal may be embodied without forming slits or protrusions on the pixel electrode or the common electrode. Therefore, the light transmissivity of the LCD device may be improved. Also, since the liquid crystal is pretilted, a response time of the VA mode liquid crystal may be improved. As a result, the LCD device may display an image having improved quality.

### Embodiment 2

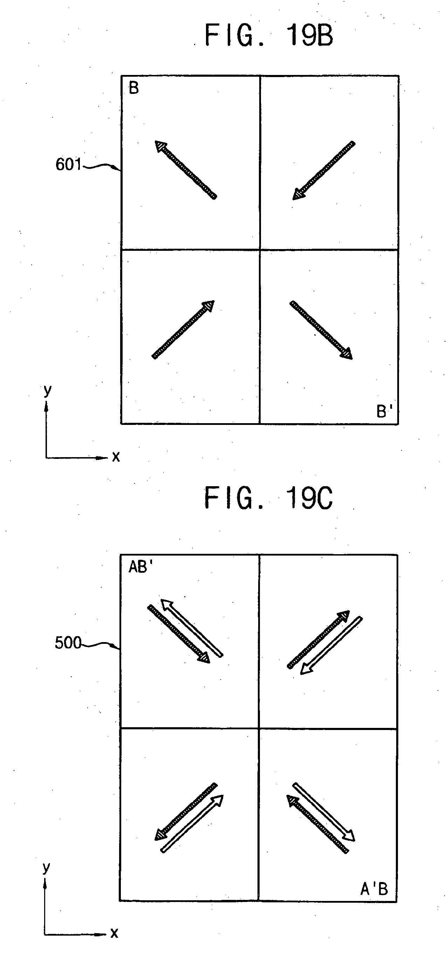

FIG. 19A is a plan view illustrating alignment directions of the exemplary lower alignment layer formed by the exemplary photoalignment processes in accordance with Embodiment 2 of the present invention. FIG. 19B is a plan view illustrating alignment directions of the exemplary upper alignment layer formed by the exemplary photoalignment processes in accordance with Embodiment 2 of the present invention. FIG. 19C is a plan view illustrating alignment directions of the exemplary LCD device including the exemplary lower alignment layer illustrated in FIG. 19A and the exemplary upper alignment layer illustrated in FIG. 19B which are combined with each other.

Referring to FIG. 19C, the LCD device 500 may have compositions which are substantially the same as or similar to those of the LCD device 100 in accordance with Embodiment 1 of the present invention except for the lower alignment vector and the upper alignment vector. Thus, any repetitive explanation will be omitted.

Referring to FIGS. 19A and 19B, an alignment substrate in accordance with Embodiment 2 of the present invention, which includes an array substrate 501 and an opposing substrate 601, may have a structure that is substantially the same as or substantially similar to that of the alignment substrate in accordance with Embodiment 1 of the present invention, except for the lower alignment vector and the upper alignment vector as illustrated in FIGS. 19A and 19B. Thus, any repetitive explanation will be omitted.

In Embodiment 2 of the present invention, when the lower alignment vector and the upper alignment vector of each sub-pixel area are projected to a reference horizontal surface, the projected lower alignment vector and the projected upper alignment vector may be opposite to each other, as shown in FIG. 19C. The projected lower alignment vector of the first sub-pixel area may head for, that is point in, a direction of 135° with respect to the first direction 'X' and the projected lower alignment vector of the fourth sub-pixel area may head for, that is point in, a direction of -45° with respect to the first direction 'X'. Thus, the projected lower alignment vector of the first sub-pixel area and the projected lower alignment vector of the fourth sub-pixel area may head for or point in opposite directions to each other. The projected lower alignment vector of the second sub-pixel area may head for or point in a direction of -135° with respect to the first direction 'X' and the projected lower alignment vector of the third sub-pixel area may head for or point in a direction of 45° with respect to the first direction 'X'. Thus, the projected lower alignment vector of the second sub-pixel area and the projected lower alignment vector of the third sub-pixel area may head for or point in opposite directions to each other.

An exemplary method of manufacturing the alignment substrate in accordance with Embodiment 2 of the present invention may have steps that are substantially the same as or substantially similar to those of the method illustrated in FIGS. 10A to 10D, except for steps of irradiating the third ultraviolet light UV3 and irradiating the fourth ultraviolet light UV4. In the method in accordance with Embodiment 2 of the present invention, an irradiating direction of the third ultraviolet light UV3 may be opposite to that illustrated in FIG. 10C, and an irradiating direction of the fourth ultraviolet light UV4 may be opposite to that illustrated in FIG. 10D.

In Embodiment 2 of the present invention, as illustrated in FIG. 10C, the third ultraviolet light UV3 is irradiated to the photoreactive polymer layer 181 in the unit pixel area PA through the third mask MS3. The third mask MS3 may expose the first and second sub-pixel areas SPA11, SPA12 which are arranged in the first line and block the third and fourth sub-pixel areas SPA21, SPA22 which are arranged in the second line. Unlike Embodiment 1 of the present invention, the polymer chains 185 of the photoreactive polymer layer 181 in the first and second sub-pixel areas SPA11, SPA12 may be photoaligned to be pretilted toward the negative column direction '-X' by the third ultraviolet light UV3.

Also, in Embodiment 2 of the present invention, as illustrated in FIG. 10D, the fourth ultraviolet light UV4 is irradiated to the photoreactive polymer layer 181 in the unit pixel area PA through the fourth mask MS4. The fourth mask MS4 may block the first and second sub-pixel areas SPA11, SPA12 which are arranged in the first line and expose the third and fourth sub-pixel areas SPA21, SPA22 which are arranged in the second line. Unlike Embodiment 1 of the present invention, the polymer chains 185 of the photoreactive polymer layer 181 in the third and fourth sub-pixel areas SPA21, SPA22 may be photoaligned to be pretilted toward the positive column direction 'X' by the fourth ultraviolet light UV4.

As a result, the array substrate 501 having the lower alignment vectors which are arranged as illustrated in FIG. 19A and the opposing substrate 601 having the upper alignment vectors which are arranged as illustrated in FIG. 19B may be manufactured. Then, the array substrate 501 and the opposing substrate 601 are combined with each other and the liquid crystal is interposed between the array substrate 501 and the opposing substrate 601 to manufacture the LCD device 500.

### Embodiment 3

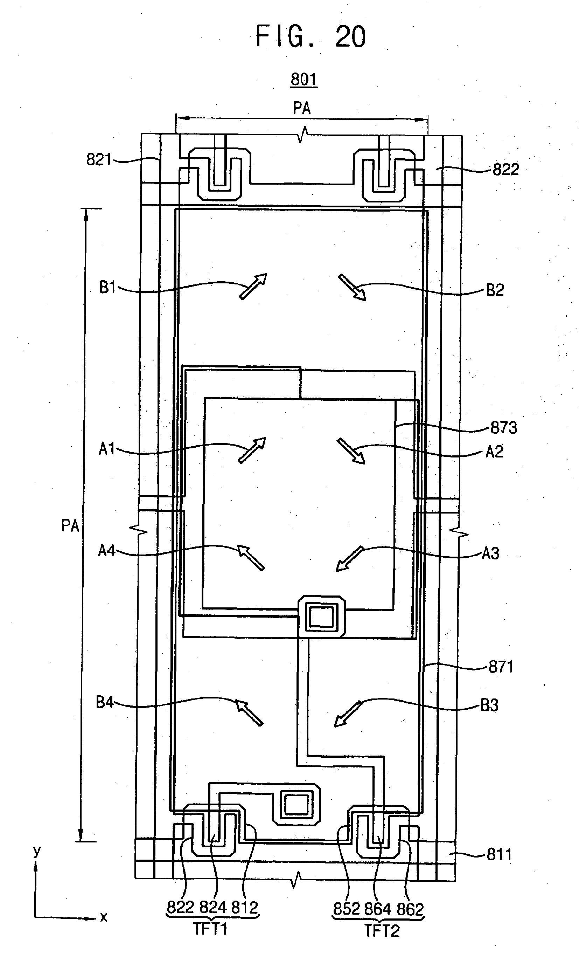

FIG. 20 is a plan view illustrating a unit pixel area PA of an exemplary array substrate in accordance with Embodiment 3 of the present invention.

Referring to FIG. 20, an array substrate 801 in accordance with Embodiment 3 of the present invention may have a structure that may be substantially the same as or substantially similar to that of the array substrate 101 in accordance with Embodiment 1 of the present invention, except that a high pixel 873 and a low pixel 871 separated from the high pixel 873 are formed or otherwise disposed in the unit pixel area PA and each of areas respectively corresponding to the high pixel 873 and the low pixel 871 is divided into four sub-pixel areas. Thus, a same or similar component will be referred using a same reference numeral and any repetitive explanation will be omitted.

In Embodiment 3 of the present invention, the low pixel 871 may be electrically connected to a first thin film transistor TFT1 and the high pixel 873 may be electrically connected to a second thin film transistor TFT2. The first thin film transistor TFT1 may be connected to a first gate line 811 and a first data line 821, and the second thin film transistor TFT2 may be electrically connected to the first gate line 811 and a second data line 822 which may be different from the first data line 821. The first thin film transistor TFT1 may include a gate electrode 812 protruding from the first gate line 811, a source electrode 822 protruding from the first data line 821, and a drain electrode 824. The second thin film transistor TFT2 may include a gate electrode 852 protruding from the first gate line 811, a source electrode 862 protruding from the second data line 822, and a drain electrode 864.

Two low pixels 871 may be separated from each other and may be disposed in the unit pixel area PA, and the high pixel 873 may be disposed between the low pixels 871 on the unit pixel PA. The two low pixels 871 may be electrically connected to the high pixel 873. For example, a portion of the unit pixel area PA corresponding to each of the two low pixels 871 may be divided into two sub-pixel areas which may be arranged in the column direction X.

In Embodiment 3 of the present invention, the lower alignment vectors A1, A2, A3, and A4 of the sub-pixel areas corresponding to the high pixel 873 may be arranged to rotate in a clockwise rotation. Also, the lower alignment vectors B1, B2, B3, and B4 of the sub-pixel areas corresponding to the low pixels 871 may be arranged to rotate in the clockwise rotation.

An opposing substrate in accordance with Embodiment 3 of the present invention may have a structure that may be substantially the same as or substantially similar to that of the opposing substrate in accordance with Embodiment 1 of the present invention, except that the opposing substrate includes an upper alignment layer having upper alignment vectors, each of which is opposite to corresponding lower alignment vectors.

An LCD device in accordance with Embodiment 3 of the present invention may have a structure that may be substantially the same as or substantially similar to that of the LCD device in accordance with Embodiment 1 of the present invention, except that the LCD device employs the array substrate 801 illustrated in FIG. 20 and a corresponding opposing substrate. Thus, any repetitive explanation will be omitted.

An exemplary method of manufacturing the alignment substrate in accordance with Embodiment 3 of the present invention may have steps that may be substantially the same as or substantially similar to those of the method in accordance with Embodiment 1 of the present invention, except that a pixel electrode includes the low pixel 871 and the high pixel 873, and the lower alignment layer and the upper alignment layer respectively have the lower alignment vectors and the upper alignment vectors described above. Thus, any repetitive explanation will be omitted.

### Embodiment 4

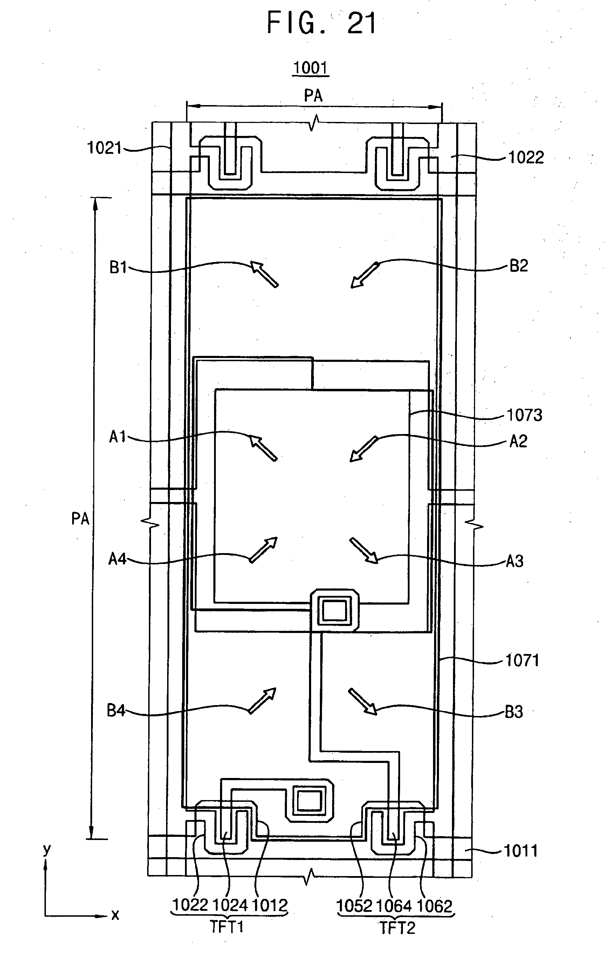

FIG. 21 is a plan view illustrating a unit pixel area PA of an exemplary array substrate in accordance with Embodiment 4 of the present invention.

Referring to FIG. 21, an array substrate 1001 in accordance with Embodiment 4 of the present invention may have a structure that may be substantially the same as or substantially similar to that of the array substrate 101 in accordance with Embodiment 1 of the present invention, except that a high pixel 1073 and a low pixel 1071 separated from the high pixel 1073 are formed or otherwise disposed in the unit pixel area PA and each of areas respectively corresponding to the high pixel 1073 and the low pixel 1071 is divided into four sub-pixel areas. Thus, a same or similar component will be referred using a same reference numeral and any repetitive explanation will be omitted.

In Embodiment 4 of the present invention, the low pixel 1071 may be electrically connected to a first thin film transistor TFT1 and the high pixel 1073 may be electrically connected to a second thin film transistor TFT2. The first thin film transistor TFT1 may be connected to a first gate line 1011 and a first data line 1021, and the second thin film transistor TFT2 may be electrically connected to the first gate line 1011 and a second data line 1022 which may be different from the first data line 1021. The first thin film transistor TFT1 may include a gate electrode 1012 protruding from the first gate line 1011, a source electrode 1022 protruding from the first data line 1021, and a drain electrode 1024. The second thin film transistor TFT2 may include a gate electrode 1052 protruding from the first gate line 1011, a source electrode 1062 protruding from the second data line 1022, and a drain electrode 1064.

In Embodiment 4 of the present invention, the lower alignment vectors A1, A2, A3, and A4 of the sub-pixel areas corresponding to the high pixel 1073 and the lower alignment vectors B1, B2, B3, and B4 of the sub-pixel area corresponding to the low pixel 1071 may be arranged in a same arrangement described in Embodiment 2 of the present invention.

An opposing substrate in accordance with Embodiment 4 of the present invention may have a structure that may be substantially the same as or substantially similar to that of the opposing substrate in accordance with Embodiment 1 of the present invention, except that the opposing substrate includes an upper alignment layer having the upper alignment vectors, each of which is opposite to corresponding lower alignment vectors of the lower alignment layer.

An LCD device in accordance with Embodiment 4 of the present invention may have a structure that may be substantially the same as or substantially similar to that of the LCD device in accordance with Embodiment 1 of the present invention, except that the LCD device employs the array substrate 1001 illustrated in FIG. 21 and the opposing substrate. Thus, any repetitive explanation will be omitted.

An exemplary method of manufacturing the alignment substrate in accordance with Embodiment 4 of the present invention may have steps that may be substantially the same as or substantially similar to those of the method in accordance with Embodiment 1 of the present invention, except that a pixel electrode includes the low pixel 1071 and the high pixel 1073, and the lower alignment layer and the upper alignment layer respectively have the lower alignment vectors and the upper alignment vectors described above. Thus, any repetitive explanation will be omitted.

According to the alignment substrate, the method and the LCD device, the transmissivity and the response time of liquid crystal may be improved, so that the display quality may be improved.

The foregoing is illustrative of the present invention and is not to be construed as limiting thereof. Although a few exemplary embodiments of the present invention have been described, those skilled in the art will readily appreciate that many modifications are possible in the exemplary embodiments without materially departing from the novel teachings and advantages of this invention. Accordingly, all such modifications are intended to be included within the scope of the present invention as defined in the claims. In the claims, means-plus-function clauses are intended to cover the structures described herein as performing the recited function and not only structural equivalents but also equivalent structures. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims. The present invention is defined by the following claims, with equivalents of the claims to be included therein.

## Claims

1. A method of manufacturing an alignment substrate, the method comprising:
providing a substrate (101, 201) including a plurality of unit pixel areas (PA) arranged in a matrix configuration, thereby defining a column direction (X) and a row direction (Y) that is substantially perpendicular to the column direction (X);
wherein each of the unit pixel areas (PA) comprises a first sub-pixel area (SPA11), a second sub-pixel area (SPA12), a third sub-pixel area (SPA 21) and a forth sub-pixel area (SPA22) arranged in a 2x2 matrix configuration;
forming a photoreactive polymer layer (181) on the substrate (101, 201); and
irradiating inclined polarized light to the photoreactive polymer layer (181) to form an alignment layer (180), the alignment layer (180) having a plurality of alignment vectors (A1, A2, A3, A4) in which polymer chains protruding from the photoreactive polymer layer (181) are pretilted according to the sub-pixel areas (SPA11, SPA12, SPA 21, SPA22);
**characterized in that**
the irradiation with inclined polarized light to the photoreactive polymer layer (181) further comprises:
irradiating a first polarized light inclined toward a first row direction, which is either a positive row direction (Y) or a negative row direction (-Y), to the photoreactive polymer layer (181) through a mask covering the second sub-pixel area (SPA12) and the fourth sub-pixel area (SPA22), which are arranged in a second row of the sub-pixel areas, and exposing the first sub-pixel area (SPA11) and the third sub-pixel area (SPA 21), which are arranged in a first row;
irradiating a second polarized light inclined toward a second row direction, which is opposite to the first row direction, to the photoreactive polymer layer (181) through a second mask covering the first sub-pixel area (SPA11) and the third sub-pixel area (SPA 21) and exposing the second sub-pixel area (SPA12) and the fourth sub-pixel area (SPA22);
irradiating a third polarized light inclined toward a first column direction, which is either a positive column direction (X) or a negative column direction (-X), to the photoreactive polymer layer (181) through a third mask covering the third sub-pixel area (SPA 21) and the fourth sub-pixel area (SPA22), which are arranged in a second line and exposing the first sub-pixel area (SPA11) and the second sub-pixel area (SPA12), which are arranged in a first line; and
irradiating a fourth polarized light inclined toward a second column direction, which is opposite to the first column direction, to the photoreactive polymer layer (181) through a fourth mask, exposing the third sub-pixel area (SPA 21) and the fourth sub-pixel area (SPA22) and covering the first sub-pixel area (SPA11) and the second sub-pixel area (SPA12).

2. The method of claim 1, wherein projections of alignment vectors (A1, A2, A3, A4) of adjacent sub-pixels (SPA11, SPA12, SPA 21, SPA22) to a surface, defined by the column direction (X) and the row direction (Y), are perpendicular to each other.

3. The method of claim 1 or 2, wherein irradiating the third polarized light and the fourth polarized light is conducted with a smaller energy level and a smaller incident angle compared to the irradiating of the first polarized light and the second polarized light such that the alignment vectors (A1, A2, A3, A4) are inclined at ± 45° with respect to the column direction (X) and the row direction (Y).

4. The method of one of the preceding claims, wherein the substrate (101, 201) comprises:
a base layer;
a gate line (111) formed on the base layer;
a data line (121) insulated from the gate line (111), the data line (121) crossing the gate line (111);
a switching element electrically connected to the gate line (111) and the data line (121); and
a pixel electrode (170) electrically connected to the switching element, and
wherein the alignment layer (180) is disposed on the pixel electrode (170) and wherein the pixel electrode (170) is formed as a single body corresponding to the sub-pixel areas (SPA11, SPA12, SPA 21, SPA22).

5. The method of one of claims 1 - 4, wherein the substrate (101, 201) comprises:
a base layer;
color filters disposed in the unit pixel areas; and
a common electrode (270) disposed on the color filters, and
wherein the alignment layer (180) is disposed on the common electrode (270).

6. The method of one of the preceding claims, wherein the substrate (101, 201) includes first and second pixel electrodes disposed in each unit pixel area, a plurality of sub-pixel areas (SPA11, SPA12, SPA 21, SPA22) corresponding to the first pixel electrode and a plurality of sub-pixel areas (SPA11, SPA12, SPA 21, SPA22) corresponding to the second pixel electrode, and wherein the alignment layer (180) is disposed on the first and the second pixel electrodes.

## Patentansprüche

1. Verfahren zur Herstellung eines Ausrichtsubstrates, wobei das Verfahren die Schritte umfasst:
Bereitstellen eines Substrates (101, 201), das eine Vielzahl von Einheitspixelbereichen (PA) aufweist, die in einer Matrixkonfiguration angeordnet sind und dadurch eine Spaltenrichtung (X) und eine Reihenrichtung (Y), die im Wesentlichen senkrecht zur Spaltenrichtung (X) verläuft, definieren;
wobei jeder der Einheitspixelbereiche (PA) einen ersten Unterpixelbereich (SPA11), einen zweiten Unterpixelbereich (SPA12), einen dritten Unterpixelbereich (SPA 21) und einen vierten Unterpixelbereich (SPA22) umfasst, die in einer 2x2-Matrixkonfiguration angeordnet sind;
Bilden einer photoreaktiven Polymerschicht (181) auf dem Substrat (101, 201), und
Bestrahlen der photoreaktiven Polymerschicht (181) mit geneigtem,
polarisiertem Licht, um eine Ausrichtschicht (180) zu bilden, wobei die Ausrichtschicht (180) eine Vielzahl von Ausrichtvektoren (A1, A2, A3, A4) aufweist, in denen von der photoreaktiven Polymerschicht (181) vorstehende Polymerketten entsprechend den Unterpixelbereichen (SPA11, SPA12, SPA 21, SPA22) vorgekippt sind;
**dadurch gekennzeichnet, dass**
die Bestrahlung der photoreaktiven Polymerschicht (181) mit geneigtem, polarisiertem Licht ferner folgendes umfasst:
Strahlen eines ersten polarisierten Lichtes, das zu einer ersten Reihenrichtung hin geneigt ist, die entweder eine positive Reihenrichtung (Y) oder eine negative Reihenrichtung (-Y) ist, auf die photoreaktive Polymerschicht (181) durch eine Maske, die den zweiten Unterpixelbereich (SPA12) und den vierten Unterpixelbereich (SPA22) bedeckt, die in einer zweiten Reihe der Unterpixelbereiche angeordnet sind, und den ersten Unterpixelbereich (SPA11) sowie den dritten Unterpixelbereich (SPA 21), die in einer ersten Reihe angeordnet sind, freilegt;
Strahlen eines zweiten polarisierten Lichtes, das zu einer zweiten Reihenrichtung hin geneigt ist, die zur ersten Reihenrichtung entgegengesetzt ist, auf die photoreaktive Polymerschicht (181) durch eine zweite Maske, die den ersten Unterpixelbereich (SPA11) und den dritten Unterpixelbereich (SPA21) bedeckt und den zweiten Unterpixelbereich (SPA12) sowie den vierten Unterpixelbereich (SPA22) freilegt;
Strahlen eines dritten polarisierten Lichtes, das zu einer ersten Spaltenrichtung hin geneigt ist, die entweder eine positive Spaltenrichtung (X) oder eine negative Spaltenrichtung (-X) ist, auf die photoreaktive Polymerschicht (181) durch eine dritte Maske, die den dritten Unterpixelbereich (SPA 21) und den vierten Unterpixelbereich (SPA22) bedeckt, die in einer zweiten Zeile angeordnet sind,
und den ersten Unterpixelbereich (SPA11) sowie den zweiten Unterpixelbereich (SPA12), die in einer ersten Zeile angeordnet sind, freilegt, und
Strahlen eines vierten polarisierten Lichtes, das zu einer zweiten Spaltenrichtung hin geneigt ist, die zur ersten Spaltenrichtung entgegengesetzt ist, auf die photoreaktive Polymerschicht (181) durch eine vierte Maske, die den dritten Unterpixelbereich (SPA 21) und den vierten Unterpixelbereich (SPA22) freilegt und den ersten Unterpixelbereich (SPA11) und den zweiten Unterpixelbereich (SPA12) bedeckt.

2. Verfahren nach Anspruch 1, wobei Projektionen von Ausrichtvektoren (A1, A2, A3, A4) benachbarter Unterpixel (SPA11, SPA12, SPA 21, SPA22) auf eine Oberfläche, die durch die Spaltenrichtung (X) und die Reihenrichtung (Y) definiert ist, senkrecht zueinander verlaufen.

3. Verfahren nach Anspruch 1 oder 2, wobei das Bestrahlen mit dem dritten polarisierten Licht und dem vierten polarisierten Licht auf einem niedrigeren Energieniveau und bei einem kleineren Einfallswinkel als beim Bestrahlen mit dem ersten polarisierten Licht und dem zweiten polarisierten Licht erfolgt, so dass die Ausrichtvektoren (A1, A2, A3, A4) um ± 45° gegenüber der Spaltenrichtung (X) und der Reihenrichtung (Y) geneigt sind.

4. Verfahren nach einem der vorhergehenden Ansprüche, wobei das Substrat (101, 201) folgendes umfasst:
eine Basisschicht;
eine auf der Basisschicht gebildete Gateleitung (111);
eine Datenleitung (121), die von der Gateleitung (111) isoliert ist, wobei die Datenleitung (121) die Gateleitung (111) kreuzt;
ein Schaltelement, das elektrisch mit der Gateleitung (111) und der Datenleitung (121) verbunden ist, und
eine Pixelelektrode (170), die elektrisch mit dem Schaltelement verbunden ist, und
wobei die Ausrichtschicht (180) auf der Pixelelektrode (170) angeordnet ist, und
wobei die Pixelelektrode (170) als eine einzige Einheit gebildet ist, die den Unterpixelbereichen (SPA11, SPA12, SPA 21, SPA22) entspricht.

5. Verfahren nach einem der Ansprüche 1 bis 4, wobei das Substrat (101, 201) folgendes umfasst:
eine Basisschicht;
in den Einheitspixelbereichen angeordnete Farbfilter; und
eine gemeinsame Elektrode (270), die auf den Farbfiltern angeordnet ist, und
wobei die Ausrichtschicht (180) auf der gemeinsamen Elektrode (270) angeordnet ist.

6. Verfahren nach einem der vorhergehenden Ansprüche, wobei das Substrat (101, 201) folgendes aufweist: erste und zweite Pixelelektroden, die in jedem Einheitspixelbereich angeordnet sind, eine Vielzahl von Unterpixelbereichen (SPA11, SPA12, SPA 21, SPA22), die der ersten Pixelelektrode entsprechen, und eine Vielzahl von Unterpixelbereichen (SPA11, SPA12, SPA 21, SPA22), die der zweiten Pixelelektrode entsprechen, und wobei die Ausrichtschicht (180) auf den ersten und zweiten Pixelelektroden angeordnet ist.

## Revendications

1. Une méthode de fabrication d'un substrat d'alignement, la méthode comprenant :
La fourniture d'un substrat (101, 201) incluant une pluralité de zones d'unité de pixel (PA) disposée dans une configuration de matrice, définissant ainsi un sens de colonne (X) et un sens de rangée (Y) qui est substantiellement perpendiculaire au sens de colonne (X) ;
Où chacune des zones d'unité de pixel (PA) comprend une première zone de sous-pixel (SPA11), une deuxième zone de sous-pixel (SPA12), une troisième zone de sous-pixel (SPA 21) et une quatrième zone de sous-pixel (SPA22) disposées dans une configuration de matrice 2x2 ;
La formation d'une couche polymère photo réactive (181) sur le substrat (101 ; 201) ; et
L'irradiation d'une lumière polarisée inclinée vers la couche polymère photo réactive (181) pour former une couche d'alignement (180), la couche d'alignement (180) ayant une pluralité de vecteurs d'alignement (A1, A2, A3, A4) dans laquelle les chaînes polymères en saillie à partir de la couche polymère photo réactive (181) sont pré-inclinées selon les zones de sous-pixel (SPA11, SPA12, SPA21, SPA22) ;
**Caractérisé en ce que**
L'irradiation avec la lumière polarisée inclinée vers la couche polymère photo réactive (181) comprend de plus :
L'irradiation d'une première lumière polarisée inclinée vers un premier sens de rangée, qui est soit un sens de rangée positif (Y) ou un sens de rangée négatif (-Y), vers la couche polymère photo réactive (181) au travers d'un masque couvrant la deuxième zone de sous-pixel (SPA12) et la quatrième zone de sous-pixel (SPA22), qui sont disposées dans une deuxième rangée des zones de sous-pixel, et exposant la première zone de sous-pixel (SPA11) et la troisième zone de sous-pixel (SPA21), qui sont disposées dans une première rangée ;
L'irradiation d'une deuxième lumière polarisée inclinée vers un deuxième sens de rangée, qui est opposé au premier sens de rangée, jusqu'à la couche polymère photo réactive (181) au travers un deuxième masque couvrant la première zone de sous-pixel (SPA11) et la troisième zone de sous-pixel (SPA21) et exposant la deuxième zone de sous-pixel (SPA12) et la quatrième zone de sous-pixel (SPA22) ;
L'irradiation d'une troisième lumière polarisée inclinée vers un premier sens de colonne, qui est soit un sens de colonne positif (X) ou un sens de colonne négatif (-X), vers la couche polymère photo réactive (181) au travers d'un troisième masque couvrant la troisième zone de sous-pixel (SPA21) et la quatrième zone de sous-pixel (SPA22), qui sont disposées sur une deuxième ligne et exposant la première zone de sous-pixel (SPA11) et la deuxième zone de sous-pixel (SPA12), qui sont disposées sur une première ligne ; et
L'irradiation d'une quatrième lumière polarisée inclinée vers un deuxième sens de colonne, qui est opposé au premier sens de colonne, vers la couche polymère photo réactive (181) au travers d'un quatrième masque, exposant la troisième zone de sous-pixel (SPA21) et la quatrième zone de sous-pixel (SPA22) et couvrant la première zone de sous-pixel (SPA11) et la deuxième zone de sous-pixel (SPA12).

2. La méthode de la revendication 1, où des projections des vecteurs d'alignement (A1, A2, A3, A4) des sous-pixels adjacents (SPA11, SPA12, SPA21, SPA22) sur une surface, définie par le sens de colonne (X) et le sens de rangée (Y), sont perpendiculaires les uns aux autres.

3. La méthode de la revendication 1 ou 2, où l'irradiation de la troisième lumière polarisée et la quatrième lumière polarisée est conduite avec un niveau d'énergie inférieur et un angle d'incidence plus petit comparé à l'irradiation de la première lumière polarisée et la deuxième lumière polarisée de sorte que les vecteurs d'alignement (A1, A2, A3, A4) sont inclinés à +/- 45° par rapport au sens de la colonne (X) et au sens de la rangée (Y).

4. La méthode de l'une des revendications précédentes, où le substrat (101, 201) comprend :
Une couche de base ;
Une ligne de porte (111) formée sur la couche de base ;
Une ligne de données (121) isolée de la ligne de porte (111), la ligne de données (121) traversant la ligne de porte (111) ;
Un élément de commutation électriquement connecté à la ligne de porte (111) et
la ligne de données (121) ; et
Une électrode de pixel (170) électriquement connectée à l'élément de commutation, et où la couche d'alignement (180) est disposée sur l'électrode de pixel (170) et où l'électrode de pixel (170) est formée comme corps simple correspondant aux zones de sous-pixel (SPA11, SPA12, SPA21, SPA22).

5. La méthode de l'une des revendications 1 à 4, où le substrat (101, 201) comprend :
Une couche de base ;
Des filtres de couleur disposés dans les zones d'unité de pixel ; et
Une électrode commune (270) disposée sur les filtres de couleurs, et
Où la couche d'alignement (180) est disposée sur l'électrode commune (270).

6. La méthode de l'une des revendications précédentes, où le substrat (101, 201) inclut des premières et deuxièmes électrodes de pixel disposées dans chaque zone d'unité de pixel, une pluralité de zones de sous-pixel (SPA11, SPA12, SPA21, SPA22) correspondant à la première électrode de pixel et une pluralité de zones de sous-pixel (SPA11, SPA12, SPA21, SPA22) correspondant à la deuxième électrode de pixel, et où la couche d'alignement (180) est disposée sur la première et la deuxièmes électrodes de pixel.
